# EUROPEAN PATENT SPECIFICATION

(11) **EP 4 282 800 B1**
(45) Date of publication and mention of the grant of the patent: **09.07.2025**
(21) Application number: 23175243.7
(22) Date of filing: 25.05.2023
(51) Int. Cl.: B65H 67/06

(54) **YARN FEEDING PACKAGE CONVEYING CARRIAGE**
FÖRDERER FÜR GARNZUFUHRPACKUNG
CHARIOT DE TRANSPORT D'EMBALLAGES D'ALIMENTATION EN FIL

(30) Priority: 27.05.2022 JP 2022086705
(43) Date of publication of application: 29.11.2023
(73) Proprietor: TMT Machinery, Inc., Osaka-shi, Osaka 541-0041 (JP)
(72) Inventor: OKUYAMA, Yasuo, Kyoto, 612-8686 (JP)
(74) Representative: Betten & Resch

(56) References cited:
- JP-U- H04 127 764

## Description

### BACKGROUND OF THE INVENTION

### FIELD OF THE INVENTION

The present invention relates to a yarn feeding package conveying carriage loaded with and used for conveying a yarn feeding package to be supplied to a creel stand.

### DESCRIPTION OF THE BACKGROUND ART

Conventionally, a yarn feeding package extraction device such as a creel robot has extracted a yarn feeding package from a yarn feeding package conveying carriage loaded with the yarn feeding package and used for conveying the yarn feeding package to supply the extracted yarn feeding package to a creel stand of a textile machine such as a false-twisting machine. The yarn feeding package conveying carriage is provided with a plurality of peg shafts cantilever-like extending from a carriage body of the yarn feeding package conveying carriage. Each of the plurality of peg shafts is inserted into a bobbin of the yarn feeding package for hanging the yarn feeding package at each peg shaft so that the yarn feeding package conveying carriage is loaded with the yarn feeding package. The yarn feeding package extraction device such as the creel robot has extracted from each peg shaft the yarn feeding package hung at the peg shaft of the yarn feeding package conveying carriage, and supplied the extracted yarn feeding package to the creel stand.

Patent Document 1 e.g. discloses a yarn feeding package conveying carriage provided with a peg shaft at which a yarn feeding package is to be hung. The yarn feeding package conveying carriage disclosed in Patent Document 1 has the peg shaft long enough for two yarn feeding packages to be hung side by side in an axis direction thereof. The peg shaft is provided with a package movement member slidably movable in an axis direction thereof for causing the yarn feeding package to move in an axis direction thereof. The package movement member includes a bobbin abutting portion arranged at a carriage-body side of the peg shaft to abut the yarn feeding package hung at the peg shaft. The package movement member further includes a hook portion arranged at a tip side of the peg shaft to be operated when causing the package movement member to slidably move.

The yarn feeding package conveying carriage disclosed in Patent Document 1 is configured such that, when being extracted from the peg shaft through the use of a yarn feeding package extraction device such as a creel robot, a yarn feeding package hung at a tip side of the peg shaft is extracted first out of two yarn feeding packages aligned along an axis direction of the peg shaft. The yarn feeding package hung at a tip side of the peg shaft abuts the yarn feeding package hung at a carriage-body side of the peg shaft so as to be positioned. In such a manner, the yarn feeding package at a tip side of the peg shaft is positioned at a predetermined extraction position in an axis direction of the peg shaft to be extracted by the creel robot, wherein the predetermined extraction position is a position for extracting by the yarn feeding package extraction device such as a creel robot. After having extracted the yarn feeding package at a tip side of the peg shaft, the yarn feeding package hung at a carriage body's side of the peg shaft is caused by the package movement member to slidably move in an axis direction of the peg shaft. The yarn feeding package having moved toward a tip side of the peg shaft abuts the bobbin abutting portion of the package movement member so as to be positioned. In such a manner, the yarn feeding package having moved toward a tip side of the peg shaft is positioned at a predetermined extraction position in an axis direction of the peg shaft to be extracted by the yarn feeding package extraction device such as a creel robot. As a result, the yarn feeding package conveying carriage is configured such that two loaded yarn feeding packages aligned along an axis direction of the peg shaft can be extracted at the same extraction position from the peg shaft. The yarn feeding package extraction device such as a creel robot is therefore capable of extracting two loaded yarn feeding packages assigned along the peg shaft through the same operation.

### (Prior Art Documents)

### (Patent Documents)

Patent Document 1: Japanese Utility Model Application Publication No. H04-127764

### (Problems to be Solved)

It has been necessary for the yarn feeding package conveying carriage in Patent Document 1, however, to be arranged with the package movement member movable in an axis direction of the peg shaft including the bobbin abutting portion and the hook portion in order to position each of the two yarn feeding packages at a predetermined extraction position. For this reason, the yarn feeding package conveying carriage in Patent Document 1 had a problem that a structure thereof is complicated. Such a complicated structure has caused a further problem that a cost of manufacturing the yarn feeding package conveying carriage in Patent Document 1 increases. The yarn feeding package conveying carriage in Patent Document 1 had a still further problem that merely two yarn feeding packages can be conveyed through the use of one peg shaft.

### SUMMARY OF THE INVENTION

The present invention has been made in view of the above-described technical problems, and an object thereof is to provide a yarn feeding package conveying carriage capable of positioning each of a plurality of yarn feeding packages aligned along an axis direction of a peg shaft at a predetermined extraction position, thereby capable of suppressing structural complication and increase in manufacturing cost.

### (Means for Solving Problems)

A first aspect of the present invention is a yarn feeding package conveying carriage for conveying a yarn feeding package while being loaded with the yarn feeding package, the carriage comprising:
a carriage body capable of traveling;
a peg shaft arranged so as to cantilever-like extend from the carriage body for hanging the yarn feeding package in such a manner that the peg shaft is inserted into a bobbin of the yarn feeding package; and
a positioning member provided for the peg shaft,
wherein the peg shaft has a first position and a second position set thereon aligned along an axis direction thereof each at which the yarn feeding package is to be hung, and
the first position is provided at a tip side of the peg shaft in the axis direction, and the second position is provided at a carriage body's side of the peg shaft in the axis direction,
wherein the positioning member is attached to the peg shaft immovably in the axis direction between the first position and the second position aligned along the axis direction to be arranged in such a manner that the positioning member is engaged with the yarn feeding package hung at the first position so as to position the yarn feeding package at the first position, and
the positioning member is arranged so as to be switchable between in a projecting state of projecting upward from the peg shaft thereby capable of being engaged with the yarn feeding package hung at the first position and in a non-projecting state of not projecting upward from the peg shaft.

According to the above-described first aspect of the yarn feeding package conveying carriage, a yarn feeding package hung at the first position of the peg shaft closer to a tip of the peg shaft out of a plurality of yarn feeding packages is engaged with the positioning member so as to be positioned. This allows the yarn feeding package to be positioned at a predetermined extraction position in an axis direction of the peg shaft at which the yarn feeding package is to be extracted by a yarn feeding package extraction device such as a creel robot, thereby to facilitate the extraction of the yarn feeding package. Further, the yarn feeding package hung at the second position of the peg shaft closer to the carriage body can be caused to move to the first position thereby to be engaged with the positioning member after the yarn feeding package at a tip side of the peg shaft having been extracted. As a result, the yarn feeding package having been caused to move from the second position to the first position can also be positioned at the predetermined extraction position to be extracted easily. It is therefore possible to position each of the plurality of yarn feeding packages aligned along an axis direction of the peg shaft at the predetermined extraction position in an axis direction of the peg shaft. This allows the yarn feeding package to be hung at each of the first position and the second position, and allows every yarn feeding package at each of the first position and the second position to be positioned at the predetermined extraction position. It is therefore possible to facilitate the extraction of the plurality of yarn feeding packages. Still further, every yarn feeding package can be positioned at the predetermined extraction position according to a simple structure having the peg shaft provided with the positioning member between the first position and the second position. It is therefore possible to suppress structural complication and increases in manufacturing cost for the yarn feeding package conveying carriage. As a consequence, according to the above-described first aspect of the yarn feeding package conveying carriage, it is possible to position each of the plurality of yarn feeding packages aligned along an axis direction of the peg shaft at the predetermined extraction position in an axis direction of the peg shaft, thereby capable of suppressing structural complication and increase in manufacturing cost.

Further, according to the above-described first aspect of the yarn feeding package conveying carriage, the positioning member is in a state of projecting upward from the peg shaft in the projecting state. It is therefore possible to position the yarn feeding package to hang it at each of the first position and the second position of the peg shaft. The positioning member is in a state of not projecting upward from the peg shaft in the non-projecting state. It is therefore possible to cause the yarn feeding package to move freely between the first position and the second position along the peg shaft.

A second aspect of the present invention is the yarn feeding package conveying carriage in the above-described first aspect, wherein
the positioning member is arranged so as to be switchable between in the projecting state and in the non-projecting state, in any of both cases where the yarn feeding package is hung and not hung at the second position.

According to the above-described second aspect of the yarn feeding package conveying carriage, as a result of putting the positioning member into the non-projecting state when the yarn feeding package is in a state of being hung at the second position, it is possible to cause the yarn feeding package to move freely from the second position to the first position along the peg shaft while overcoming the positioning member at the peg shaft. Subsequently, as a result of putting the positioning member into the projecting state after having caused the yarn feeding package to move to the first position, it is possible to position the yarn feeding package thereby to hang it at the second position of the peg shaft. Further, as a result of putting the positioning member into the non-projecting state when the yarn feeding package is in a state of not being hung at the second position, it is possible to cause the yarn feeding package to move freely from the first position to the second position along the peg shaft while overcoming the positioning member at the peg shaft, thereby to hang it at the second position of the peg shaft. Still further, as a result of putting the positioning member into the projecting state when the yarn feeding package is in a state of not being hung at the second position, it is possible to cause the yarn feeding package to be engaged with the positioning member so as to position the yarn feeding package thereby to hang it at the first position of the peg shaft. It is therefore possible to position the yarn feeding package thereby to hang it at the first position of the peg shaft irrespective of whether the yarn feeding package is in a state of being hung at the second position or not being hung at the second position.

A third aspect of the present invention is the yarn feeding package conveying carriage in the above-described first or second aspect, wherein the positioning member is attached to the peg shaft rotatably around a rotary shaft extending in a direction perpendicular to the axis direction to be arranged so as to be switchable between in the projecting state and in the non-projecting state, as a result of rotating around the rotary shaft, the positioning member includes an engagement portion capable of projecting upward from the peg shaft thereby capable of being engaged with the yarn feeding package hung at the first position, the engagement portion is at a position projecting upward from the peg shaft in the projecting state, and is at a position not projecting upward from the peg shaft in the non-projecting state, and the positioning member is in the non-projecting state without any external force being exerted, and is put into the projecting state upon any operation of rotation being performed.

According to the above-described third aspect of the yarn feeding package conveying carriage, the engagement portion of the positioning member projects upward from the peg shaft in the projecting state. It is therefore possible to position the yarn feeding package to hang it at each of the first position and the second position of the peg shaft. The engagement portion of the positioning member does not project upward from the peg shaft in the non-projecting state. It is therefore possible to cause the yarn feeding package to move freely between the first position and the second position along the peg shaft.

A fourth aspect of the present invention is the yarn feeding package conveying carriage in the above-described first or second aspect, wherein
the peg shaft is formed with a groove thereon along a peripheral direction around an axis thereof,
the positioning member includes an attachment portion attached to the peg shaft to be fit into the groove slidably along the peripheral direction, and a convex portion in a shape projecting from the attachment portion,
the positioning member is arranged so as to be switchable between in the projecting state and in the non-projecting state as a result of causing the attachment portion to rotate slidably along the groove around the peg shaft,
in the projecting state, the attachment portion is attached to the peg shaft such that the convex portion is in a state of projecting upward from the peg shaft to be engaged with the yarn feeding package hung at the first position, and in the non-projecting state, the attachment portion is attached to the peg shaft such that the convex portion is in a state of not projecting upward from the peg shaft.

According to the above-described fourth aspect of the yarn feeding package conveying carriage, the convex portion of the positioning member is in a state of projecting upward from the peg shaft in the projecting state. It is therefore possible to position the yarn feeding package to hang it at each of the first position and the second position of the peg shaft. The convex portion of the positioning member is in a state of not projecting upward from the peg shaft in the non-projecting state. It is therefore possible to cause the yarn feeding package to move freely between the first position and the second position along the peg shaft.

A fifth aspect of the present invention is the yarn feeding package conveying carriage in any one of the above-described first to fourth aspects, wherein
the peg shaft includes a plurality of peg shafts, and the plurality of peg shafts cantilever-like extend from the carriage body.

According to the above-described fifth aspect of the yarn feeding package conveying carriage, the plurality of peg shafts are arranged so as to extend from the carriage body. This makes it possible to hang a plurality of yarn feeding packages at each of the plurality of peg shafts of one carriage body. This allows the yarn feeding package conveying carriage to be loaded with a large number of yarn feeding packages and used for conveying such a large number of yarn feeding packages.

A sixth aspect of the present invention is the yarn feeding package conveying carriage in any one of the above-described first to fifth aspects, wherein
the yarn feeding package includes one yarn feeding package or a plurality of yarn feeding packages, and the second position is set as a position at which the one yarn feeding package is to be hung or the plurality of yarn feeding packages are to be hung.

According to the above-described sixth aspect of the yarn feeding package conveying carriage, it is possible to hang one or more yarn feeding packages at the second position. As a result, many yarn feeding packages such as two or more can be hung at one peg shaft. This allows the yarn feeding package conveying carriage to be loaded with a large number of yarn feeding packages and used for conveying such a large number of yarn feeding packages.

A seventh aspect of the present invention is the yarn feeding package conveying carriage in any one of the above-described first to sixth aspects, wherein
the peg shaft cantilever-like extends diagonally upward from the carriage body.

According to the above-described seventh aspect of the yarn feeding package conveying carriage, the peg shaft extends diagonally upward from the carriage body. As a result, even if any external force acts on the yarn feeding package conveying carriage to cause vibration, e.g., it is still possible to more reliably reduce the occurrence of drop of the yarn feeding package hung at the peg shaft. Further, the yarn feeding package hung at the first position is engaged with the positioning member in a state of being biased by gravity in an axis direction of the peg shaft toward the carriage body. This allows the yarn feeding package hung at the first position closer to a tip of the peg shaft to be reliably engaged with the positioning member so as to be positioned stably. As a result of the peg shaft's projecting upward, the yarn feeding package hung at the peg shaft is supported stably by its own weight on the peg shaft. In the absence of the positioning member at the peg shaft, however, the plurality of yarn feeding packages are positioned such that the mutual abutting occurs among the plurality of yarn feeding packages hung at the peg shaft, and that a self-weight of the yarn feeding package at a tip side of the peg shaft is exerted on the plurality of yarn feeding packages. This imposes difficulty in extracting the yarn feeding package at a tip side of the peg shaft. According to the above-described seventh aspect of the yarn feeding package conveying carriage, however, the peg shaft extends upward and the positioning member to be engaged with the yarn feeding package hung at the first position is provided. This prevents the yarn feeding package hung at the first position of the peg shaft from abutting the yarn feeding package hung at the second position of the peg shaft, thereby capable of easily extracting the yarn feeding package hung at the first position closer to a tip of the peg shaft.

An eighth aspect of the present invention is the yarn feeding package conveying carriage in any one of the above-described first to seventh aspects, wherein
said yarn feeding package conveying carriage is a carriage for conveying a yarn feeding package to be extracted and supplied to a creel stand by a creel robot while being loaded with the yarn feeding package.

According to the above-described eighth aspect of the yarn feeding package conveying carriage, the creel robot extracts the yarn feeding package out of the plurality of yarn feeding packages hung at the first position closer to a tip of the peg shaft to be engaged with the positioning member so as to be positioned. More specifically, the first position is the predetermined extraction position for the creel robot to extract the yarn feeding package from the peg shaft. The yarn feeding package hung at the second position closer to the carriage body of the peg shaft can be caused to move to the first position to be engaged with the positioning member after the yarn feeding package closer to a tip of the peg shaft having been extracted. As a result, the yarn feeding package having been caused to move from the second position to the first position can also be positioned at the predetermined extraction position to be extracted easily by the creel robot. It is therefore possible to position each of the plurality of yarn feeding packages aligned along an axis direction of the peg shaft at the predetermined extraction position for extraction by the creel robot in an axis direction of the peg shaft. Further, the structure facilitating the extraction of the plurality of yarn feeding packages by the creel robot can be realized without the need of providing any creel robot with particular equipment for extracting the yarn feeding package.

### (Advantageous Effects of the Invention)

According to the present invention, it is possible to provide a yarn feeding package conveying carriage capable of positioning each of a plurality of yarn feeding packages aligned along an axis direction of a peg shaft at a predetermined extraction position, thereby capable of suppressing structural complication and increase in manufacturing cost.

### BRIEF DESCRIPTION OF THE DRAWINGS

FIG. 1 is a perspective view showing a yarn feeding package conveying carriage according to an embodiment of the present invention;
FIG. 2 is a perspective view of a yarn feeding package conveying carriage in a state of being loaded with a plurality of yarn feeding packages;
FIG. 3 is a plan view showing schematically an arrangement of a false-twisting machine having a creel stand placed therein;
FIG. 4 is a perspective view of a creel robot as seen laterally;
FIG. 5 is a perspective view showing a state where a yarn feeding package is hung at a peg shaft of a yarn feeding package conveying carriage, of which a part of the peg shaft and the yarn feeding package is shown in an enlarged manner;
FIG. 6 is a perspective view showing a part of FIG. 5 enlarged;
FIG. 7 is a side view showing in part a yarn feeding package conveying carriage in a state of being loaded with a plurality of yarn feeding packages;
FIG. 8 is a side view showing in part a yarn feeding package conveying carriage in a state of being loaded with a plurality of yarn feeding packages of which yarn feeding packages are hung at a second position of each peg shaft of the yarn feeding package conveying carriage;
FIG. 9 is an explanatory side view of a positioning member provided for a peg shaft;
FIG. 10 is an explanatory side view of the motion of a positioning member when a yarn feeding package hung at a peg shaft moves from a second position to a first position of a peg shaft;
FIG. 11 is an explanatory perspective view of a yarn feeding package conveying carriage according to a modified embodiment of the present application, of which a peg shaft and a positioning member of the yarn feeding package conveying carriage according to the modified embodiment of said present invention are shown in an enlarged manner; and
FIG. 12 is a perspective view showing a part of FIG. 11 in an enlarged manner.

### DESCRIPTIONS OF EMBODIMENTS OF THE INVENTION

Hereinafter, embodiments for carrying out the present invention will be described with reference to the drawings. The present invention is widely applicable for a variety of purposes as a yarn feeding package conveying carriage loaded with a yarn feeding package and used for conveying such a yarn feeding package.

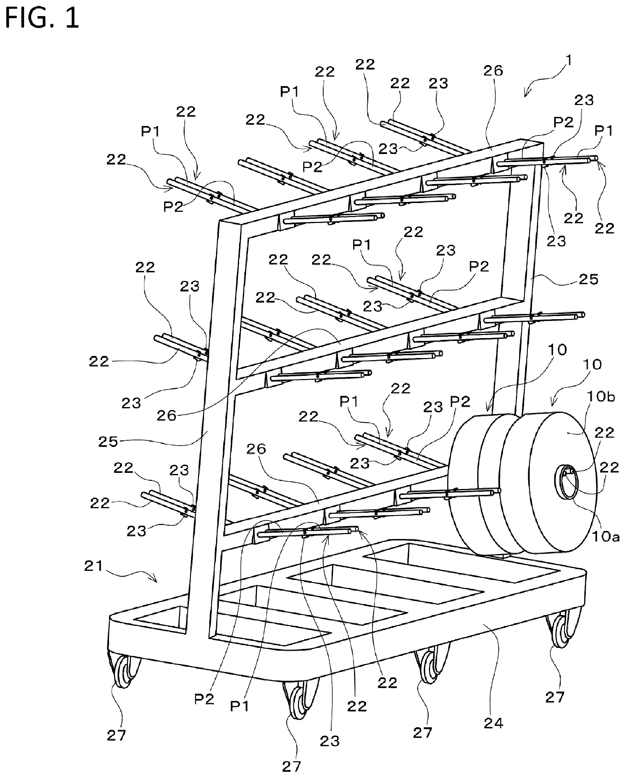

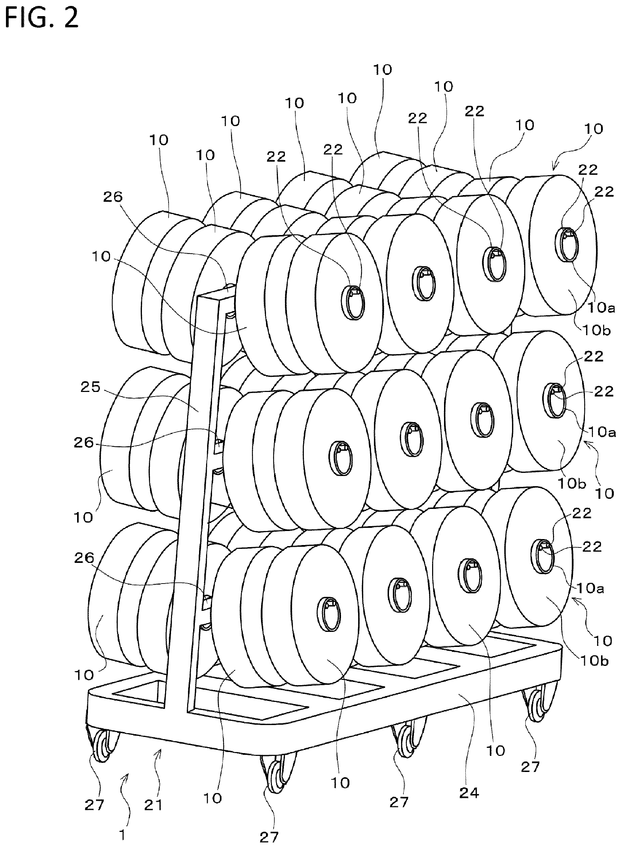

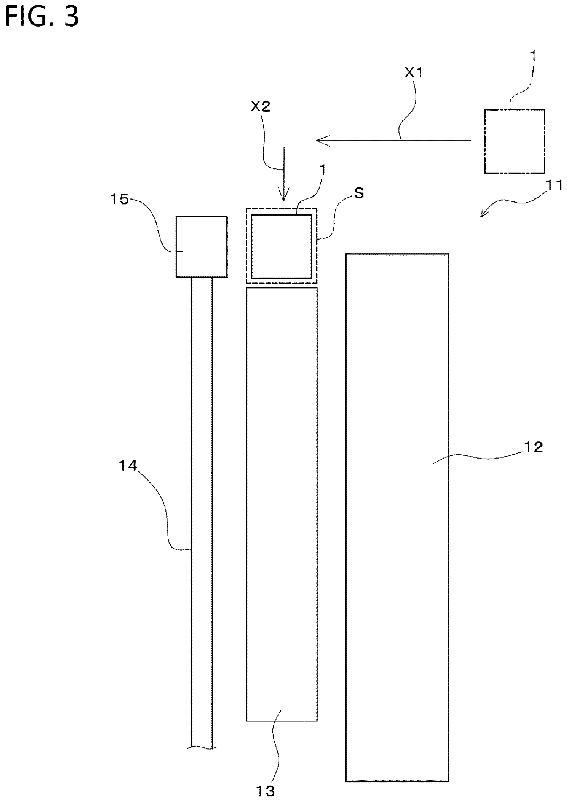

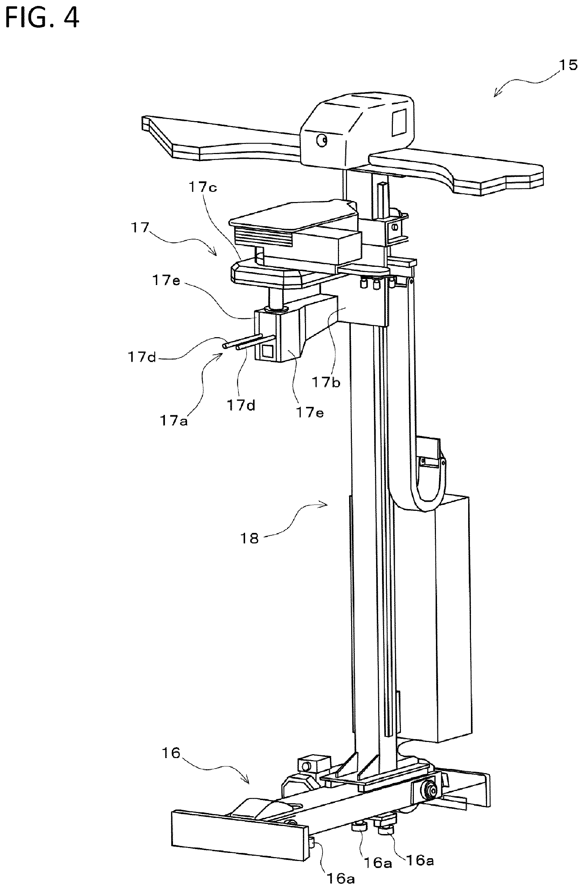

FIG. 1 is a perspective view showing a yarn feeding package conveying carriage 1 according to an embodiment of the present invention. FIG. 2 is a perspective view of the yarn feeding package conveying carriage 1 in a state of being loaded with a plurality of yarn feeding packages 10. FIG. 3 is a plan view showing schematically an arrangement of a false-twisting machine 11 having a creel stand 13 placed therein. FIG. 4 is a perspective view of a creel robot 15 as seen laterally.

The yarn feeding package conveying carriage 1 is configured as a carriage to be loaded with the yarn feeding package 10 to be supplied to a creel stand 13 of a false-twisting machine 11 such as the one shown in FIG. 3 and used for conveying the yarn feeding package 10. The yarn feeding package 10 loaded to the yarn feeding package conveying carriage 1 is extracted and supplied to the creel stand 13 by a yarn feeding package extraction device such as the creel robot 15 of the false-twisting machine 11 shown in, e.g., FIGS. 3 and 4. As shown in FIGS. 1 and 2, the yarn feeding package 10 is configured by winding yarn 10b around a circular cylindrical bobbin 10a.

As shown in FIG. 3, at the false-twisting machine 11, a machine base 12 extends in a lengthwise direction, and a large number of yarn processing spindles including yarn processing mechanisms (not shown) such as yarn feeding rollers, superheaters, twisting units, winding units, etc. are aligned on opposite sides of the machine base 12. Original yarn is fed from the creel stand 13 to the machine base 12 of the false-twisting machine 11. The creel stand 13 is arranged next to the machine base 12, and configured to be supplied with the yarn feeding package 10 from the creel robot 15 and feed yarn unwound from the supplied yarn feeding package 10 to the machine base 12.

As shown in FIGS. 3 and 4, the creel robot 15 is configured to extract the yarn feeding package 10 having been conveyed by the yarn feeding package conveying carriage 1 from the yarn feeding package conveying carriage 1 and supply the extracted yarn feeding package 10 to the creel stand 13. The creel robot 15 is configured to move along a rail 14 placed next to the creel stand 13 to supply the yarn feeding package 10 to the creel stand 13. The creel robot 15 is also configured to extract the yarn feeding package 10 from the yarn feeding package conveying carriage 1 at a predetermined position at an end of the rail 14. During extraction of the yarn feeding package 10 from the yarn feeding package conveying carriage 1 by the creel robot 15, the yarn feeding package conveying carriage 1 loaded with the yarn feeding package 10 is caused to travel so that it moves to a predetermined carriage stop position S indicated by dashed lines in FIG. 3, and then stops at the carriage stop position S. The carriage stop position S is defined as a position for the creel robot 15 at the predetermined position on the rail 14 to conduct work of extracting the yarn feeding package 10 from the yarn feeding package conveying carriage 1. In causing the yarn feeding package conveying carriage 1 to move to the carriage stop position S, the yarn feeding package conveying carriage 1 is first caused to move to a position closer to the creel stand 13 and the creel robot 15 in a direction substantially perpendicular to the lengthwise direction of the machine base 12 of the false-twisting machine 11 as indicated by an arrow X1 in FIG. 3. After moving to the position closer to the creel stand 13 and the creel robot 15, the yarn feeding package conveying carriage 1 is next caused to move to the carriage stop position S as indicated by an arrow X2 in FIG. 3. The creel robot 15 conducts the work of extracting the yarn feeding package 10 from the yarn feeding package conveying carriage 1 caused to stop at the carriage stop position S.

As shown in FIG. 4, the creel robot 15 includes a traveling carriage 16 capable of traveling on the rail 14 with drive wheels 16a to roll on the rail 14, a yarn feeding changer 17 movably arranged up and down relative to the traveling carriage 16, an up-down unit 18 for causing the yarn feeding changer 17 to move up and down, and others. The yarn feeding changer 17 is configured as a unit to extract the yarn feeding package 10 from the yarn feeding package conveying carriage 1 and to supply the yarn feeding package 10 to the creel stand 13. The yarn feeding changer 17 includes a package holder 17a, a first support 17b, a second support 17c, and others. The package holder 17a is provided as a mechanism to hold the yarn feeding package 10 during extraction of the yarn feeding package 10 from the yarn feeding package conveying carriage 1, and includes yarn feeding package holding members 17d in a pair to hold the yarn feeding package 10 directly. The yarn feeding package holding members 17d in a pair are arranged as rod-like members in a pair cantilever-like extending in a horizontal direction in parallel to each other. The package holder 17a is configured to hold the yarn feeding package 10 by inserting the yarn feeding package holding members 17d in a pair into the bobbin 10a of the yarn feeding package 10. The first support 17b is supported by the up-down unit 18 and arranged in such a manner as to move in a vertical direction by being driven by the up-down unit 18. The first support 17b includes a guide member 17e that supports the package holder 17a in a manner allowing the package holder 17a to slidably move in the horizontal direction. The second support 17c is arranged movably in the horizontal direction relative to the first support 17b. The second support 17c supports the package holder 17a in a suspended state. The second support 17c is configured to cause the package holder 17a supported in a suspended manner to slidably move in the horizontal direction relative to the guide member 17e of the first support 17b as a result of moving in the horizontal direction relative to the first support 17b.

The creel robot 15 is configured to cause the yarn feeding package holding members 17d in a pair of the package holder 17a of the yarn feeding changer 17 to go into the bobbin 10a of the yarn feeding package 10 loaded to the yarn feeding package conveying carriage 1, then cause the yarn feeding changer 17 to move up so as to lift the yarn feeding package 10 using the yarn feeding package holding members 17d in a pair, and then cause the yarn feeding package holding members 17d in a pair retreat, thereby extracting the yarn feeding package 10. The creel robot 15 is configured to be capable of extracting the yarn feeding package 10 by the provision of the yarn feeding package holding members 17d in a pair of the package holder 17a as the rod-like members in a pair.

The yarn feeding package conveying carriage 1 according to an embodiment of the present invention will be described next in detail. As shown in FIGS. 1 and 2, the yarn feeding package conveying carriage 1 has a configuration including a carriage body 21, a plurality of peg shafts 22, and a positioning member 23 provided for each of the plurality of peg shafts 22.

The carriage body 21 has a configuration including a base portion 24, vertical frames 25 in a pair, a plurality of horizontal frames 26, and a plurality of wheels 27. The base portion 24 is arranged as a mount forming a foundation structure of the carriage body 21. In an exemplary configuration described in an embodiment, the base portion 24 is arranged as a frame body having a substantially rectangular outer shape. The base portion 24 is not always required to be arranged as a frame body but may be formed into, e.g., a plate-like shape. The base portion 24 is provided with a positioning hole (not shown) formed at a lower surface thereof. The positioning hole is provided for positioning the yarn feeding package conveying carriage 1 at a predetermined position at the above-described carriage stop position S when the yarn feeding package conveying carriage 1 stops at the carriage stop position S. At the carriage stop position S, a positioning pin is provided that is to be engaged in the positioning hole of the base portion 24. While the yarn feeding package conveying carriage 1 stops at the carriage stop position S, the positioning hole of the base portion 24 is engaged with the positioning pin at the carriage stop position S to position the yarn feeding package conveying carriage 1 at the predetermined position at the carriage stop position S.

The vertical frames 25 in a pair are arranged as columnar frame parts projecting upward from the base portion 24 and extending in the vertical direction. In this embodiment, the vertical frame 25 has a prism shape as an example. The vertical frames 25 in a pair are arranged at opposite ends of the base portion 24 in the lengthwise direction having a substantially rectangular outer shape in such a manner as to project upward and extend from the base portion 24. The vertical frames 25 in a pair are arranged so as to extend in parallel to each other in the vertical direction.

Each of the plurality of horizontal frames 26 is arranged as a horizontally-extending prism member connecting the vertical frames 25 in a pair to each other. Specifically, each horizontal frame 26 is arranged in such a manner as to extend horizontally while being stretched between the vertical frames 25 in a pair. The horizontal frame 26 has one end in the lengthwise direction fixed to one of the vertical frames 25 in a pair, and the other end in the lengthwise direction fixed to the other of the vertical frames 25 in a pair. The horizontal frames 26 are aligned along a vertical direction between the vertical frames 25 in a pair and arranged so as to extend in parallel to each other. Specifically, all the horizontal frames 26 are coupled to the vertical frame 25 at positions differing from each other in the vertical direction. An exemplary configuration described in this embodiment includes three horizontal frames 26. Thus, in this embodiment, the horizontal frames 26 are arranged at three different height positions in the vertical direction including an upper position, a middle position, and a lower position.

The plurality of wheels 27 is arranged at the bottom of the base portion 24 and attached to the base portion 24 rotatably about a rotary axis (not shown). The provision of the wheels 27 allows the carriage body 21 to travel. In causing the yarn feeding package conveying carriage 1 to move, an operator (not shown) pushes the carriage body 21, *e.g.,* so that the plurality of wheels 27 rotate at the bottom of the base portion 24 and the yarn feeding package conveying carriage 1 travels, and thereby it can move.

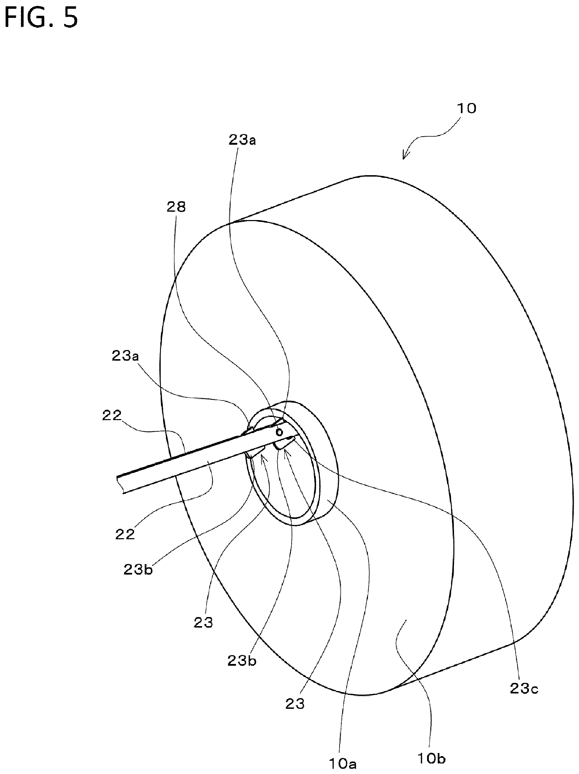

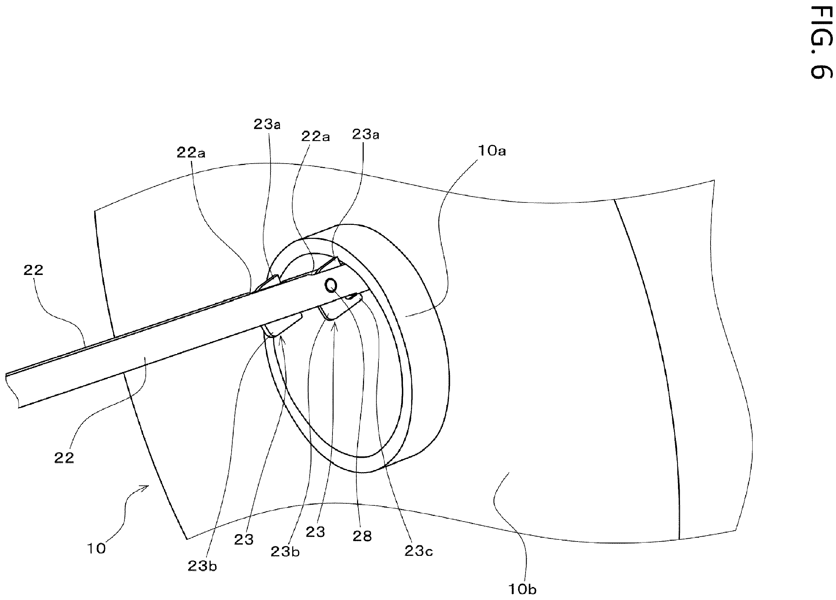

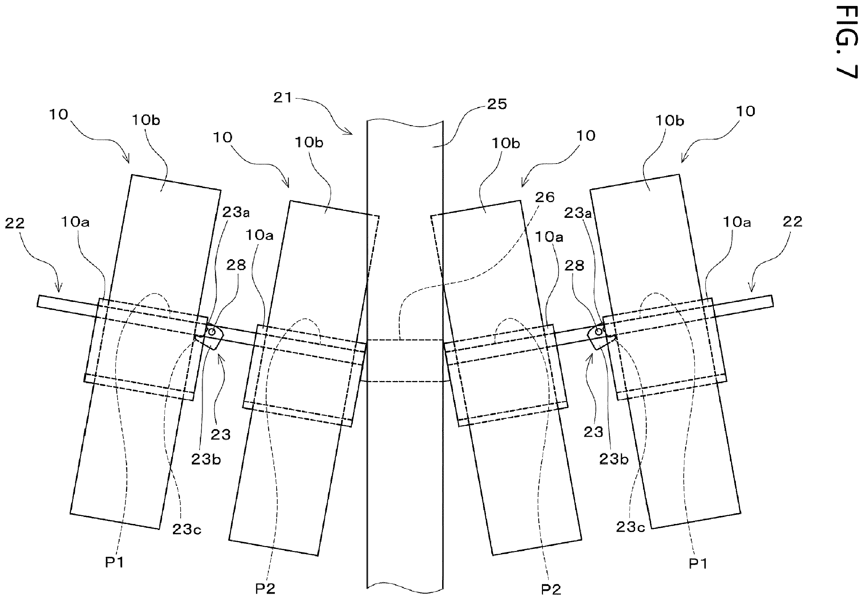

FIG. 5 is a perspective view showing a state where the yarn feeding package 10 is hung at the peg shaft 22 of the yarn feeding package conveying carriage 1, of which a part of the peg shaft 22 and the yarn feeding package 10 is shown in an enlarged manner. FIG. 6 is a perspective view showing a part of FIG. 5 enlarged. FIG. 7 is a side view showing in part the yarn feeding package conveying carriage 1 in a state of being loaded with the plurality of yarn feeding packages 10.

As shown in FIGS. 1, 2, and 5 to 7, the peg shaft 22 is arranged so as to cantilever-like extend from the carriage body 21 and is configured, as a shaft-like member, such that the yarn feeding package 10 can be hung in a state where the peg shaft 22 is inserted into the bobbin 10a of the yarn feeding package 10. The peg shaft 22 is arranged as an elongated shaft-like member having, e.g., a circular section, and has an axis direction conforming to a direction in which the peg shaft 22 extends from the carriage body 21. At the yarn feeding package conveying carriage 1, the peg shaft 22 includes the plurality of peg shafts 22 and these peg shafts 22 extend from the carriage body 21. Each of the plurality of peg shafts 22 extends from the horizontal frame 26 of the carriage body 21. In this embodiment, the plurality of peg shafts 22 extends from each of the three horizontal frames 26 aligned vertically.

The peg shafts 22 are aligned along a direction in which the horizontal frame 26 extends horizontally and extend in parallel to each other from the horizontal frame 26. Further, with respect to the direction in which the horizontal frame 26 extends horizontally, the peg shafts 22 extend from the horizontal frame 26 toward opposite sides of the horizontal direction. Each peg shaft 22 extends diagonally upward from the horizontal frame 26 of the carriage body 21. More specifically, each peg shaft 22 extends diagonally upward from the horizontal frame 26 in a direction substantially perpendicular to the direction in which the horizontal frame 26 extends.

The peg shaft 22 is configured to hold the yarn feeding package 10 by hanging the yarn feeding package 10 on two peg shafts 22 simultaneously. The two peg shafts 22 on which the yarn feeding package 10 is to be hung simultaneously extend from the horizontal frame 26 while being aligned at approximate positions and extending in parallel to each other. During extraction of the yarn feeding package 10 from the yarn feeding package conveying carriage 1 by the creel robot 15, the yarn feeding package 10 hung at the two peg shafts 22 is extracted by the yarn feeding changer 17 of the creel robot 15. At this time, the yarn feeding package holding members 17d in a pair of the package holder 17a of the yarn feeding changer 17 of the creel robot 15 are inserted into the bobbin 10a of the yarn feeding package 10 in such a manner as to be interposed between the two peg shafts 22. Then, the creel robot 15 is actuated to cause the yarn feeding package holding members 17d in a pair interposed between the two peg shafts 22 in the bobbin 10a to move up, thereby lifting the yarn feeding package 10 from the two peg shafts 22 with the yarn feeding package holding members 17d in a pair. Next, the creel robot 15 is actuated to cause the yarn feeding package holding members 17d in a pair of the package holder 17a to retreat, thereby extracting the yarn feeding package 10 supported with the yarn feeding package holding members 17d in a pair from the two peg shafts 22. The two peg shafts 22 on which the yarn feeding package 10 is to be hung simultaneously are arranged at an interval therebetween having a distance dimension less than an inner diameter dimension of the bobbin 10a in order to insert both of these peg shafts 22 into the bobbin 10a of the yarn feeding package 10. Additionally, in order to interpose the yarn feeding package holding members 17d in a pair between the two peg shafts 22, the distance dimension corresponding to the interval between the two peg shafts 22 is set at a distance dimension greater than a dimension in a width direction of the region where the yarn feeding package holding members 17d in a pair are aligned in parallel to each other.

As shown in FIGS. 1 and 7, the peg shaft 22 is arranged with a first position P1 and a second position P2 that are positions aligned along an axis direction of the peg shaft 22 and at which the yarn feeding package 10 is to be hung. The first position P1 is provided at a position closer to a tip of the peg shaft 22 in the axis direction of the peg shaft 22. Specifically, the first position P1 is provided at a tip side of the peg shaft 22 cantilever-like extending from the carriage body 21. The second position P2 is provided at a position closer to the carriage body 21 in the axis direction of the peg shaft 22. Specifically, the second position P2 is provided at a root side of the peg shaft 22 cantilever-like extending from the carriage body 21.

The first position P1 is provided at a tip side of the peg shaft 22 at which one yarn feeding package 10 is to be hung. The first position P1 is defined as a predetermined extraction position for the creel robot 15 when the yarn feeding package 10 is extracted by the creel robot 15. The second position P2 is provided at the carriage body (21)'s side in the axis direction of the peg shaft 22 at which one or the plurality of yarn feeding packages 10 is to be hung. In an exemplary state shown in FIGS. 1, 2, and 7, one yarn feeding package 10 is hung at the first position P1 and one yarn feeding package 10 is hung at the second position P2. In an exemplary state shown in FIGS. 5 and 6, one yarn feeding package 10 is hung at the first position P1 and no yarn feeding package 10 is hung at the second position P2.

While one yarn feeding package 10 is hung at the second position P2 in the exemplary configuration shown in FIGS. 1, 2, and 7, a configuration of hanging the plurality of yarn feeding packages 10 at the second position P2 is also feasible.

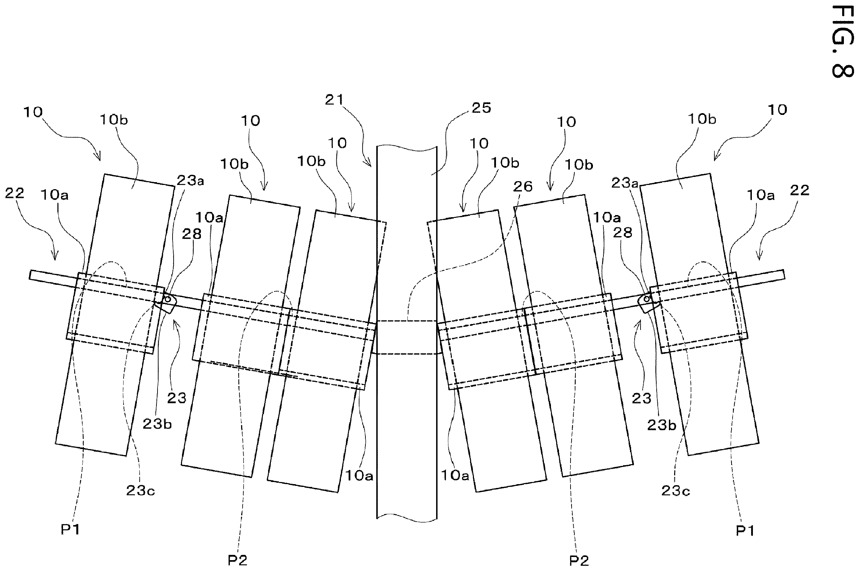

FIG. 8 is a side view showing in part the yarn feeding package conveying carriage 1 in a state of being loaded with the plurality of yarn feeding packages 10 of which yarn feeding packages 10 are hung at the second position P1 of each peg shaft 22 of the yarn feeding package conveying carriage 1. In the configuration shown in FIG. 8, the second position P2 of the peg shaft 22 is provided at a position closer to the carriage body 21 in the axis direction of the peg shaft 22 for hanging the plurality of yarn feeding packages 10. As shown in FIG. 8, if the plurality of yarn feeding packages 10 is hung at the second position P2, the peg shaft 22 is determined to be long in the axis direction in response to the number of the yarn feeding packages 10 to be hung at the second position P2. At the second position P2, the yarn feeding packages 10 are hung while being aligned along an axis direction of the peg shaft 22. In the exemplary configuration shown in FIG. 8, two yarn feeding packages 10 are hung at the second position P2 of the peg shaft 22. A configuration of hanging the plurality of yarn feeding packages 10 at the second position P2 is not limited to the configuration of hanging two yarn feeding packages 10. A configuration of hanging three or more yarn feeding packages 10 is also feasible.

As shown in FIGS. 1 and 5 to 8, the positioning member 23 is provided to the peg shaft 22 as a member for positioning the yarn feeding package 10 at the first position P1 while the yarn feeding package 10 is hung at the first position P1. The positioning member 23 is provided to each of the plurality of peg shafts 22 and each peg shaft 22 is provided with one positioning member 23. The positioning member 23 is attached to the peg shaft 22 in a state of not moving in the axis direction of the peg shaft 22 between the first position P1 and the second position P2 in the axis direction of the peg shaft 22. Further, the positioning member 23 is provided between the first position P1 and the second position P2 in the axis direction of the peg shaft 22 in such a manner as to be engaged with the yarn feeding package 10 hung at the first position P1 to position the yarn feeding package 10 at the first position P1. The positioning member 23 is arranged so as to be switchable between in a projecting state of projecting upward from the peg shaft 22 thereby to be engaged with the yarn feeding package 10 hung at the first position P1 and in a non-projecting state of not projecting upward from the peg shaft 22. Still further, the positioning member 23 is arranged so as to be switchable between in the projecting state and in the non-projecting state, in any of both cases where the yarn feeding package 10 is hung and not hung at the second position P2.

As shown in FIGS. 5 to 8, the positioning member 23 is rotatably attached to the peg shaft 22. A rotary shaft 28 penetrating the peg shaft 22 in a direction perpendicular to the axis direction of the peg shaft 22 is mounted on the peg shaft 22, and the positioning member 23 is rotatably attached to the rotary shaft 28. In such a manner, the positioning member 23 is attached to the peg shaft 22 rotatably about the rotary shaft 28 extending in a direction conforming to the direction perpendicular to the axis direction of the peg shaft 22. The positioning member 23 is provided in such a manner as to be switched in a state between the projecting state of projecting upward from the peg shaft 22 and the non-projecting state of not projecting upward from the peg shaft 22 by rotating about the rotary shaft 28. The peg shaft 22 is provided with a recess portion 22a (see FIG. 6) at a location in the presence of the positioning member 23, which is formed into a recessed shape as a result of cutting out a part of an outer peripheral surface of the peg shaft 22. The positioning member 23 rotatably attached to the peg shaft 22 is specifically attached to the peg shaft 22 such that it is in a rotatable state in a region inside the recess portion 22a. The recess portion 22a is not limited to only an embodiment having a region where the positioning member 23 is in a rotatable state to the peg shaft 22, but such a region may be provided in a different embodiment. A slit-like through-formed region, e.g., in the peg shaft 22 may be provided and the positioning member 23 may be rotatably attached in slit-like through-formed region.

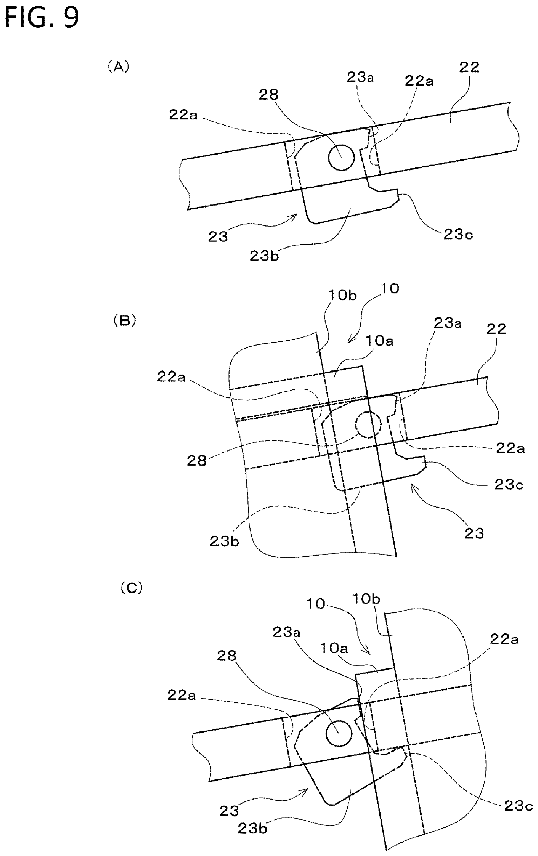

FIG. 9 is an explanatory side view of the positioning member 23 provided for the peg shaft 22. It is to be noted that FIG. 9 shows the positioning member 23 and a part of the peg shaft 22 in an enlarged manner. Further, FIG. 9 shows a state (A) where no yarn feeding package 10 is hung at the peg shaft 22. FIG. 9 further shows a state (B) where the yarn feeding package 10 hung at the second position P2 of the peg shaft 22 slidably moves in the axis direction of the peg shaft 22 from the second position P2 to the first position P1. FIG. 9 still further shows a state (C) where the yarn feeding package 10 hung at the peg shaft 22 has moved from the second position P2 to the first position P1. As shown in FIGS. 5 to 9, the positioning member 23 rotatably attached to the peg shaft 22 has a configuration including an engagement portion 23a, a weight portion 23b, and an abutting portion 23c.

At the positioning member 23, the engagement portion 23a is provided as a portion that can be placed above the rotary shaft 28. The engagement portion 23a is provided as a portion configured to project upward from the peg shaft 22 and as a portion capable of being engaged with the yarn feeding package 10 hung at the first position P1 of the peg shaft 22. While no external force acts on the positioning member 23 rotatably attached to the peg shaft 22, the engagement portion 23a is arranged inside the recess portion 22a of the peg shaft 22. Thus, while no external force acts on the positioning member 23, the engagement portion 23a does not project upward from the recess portion 22a so the positioning member 23 is in a state of not projecting upward from the recess portion 22a. In this state, specifically, in a state where the positioning member 23 does not project upward from the recess portion 22a, the positioning member 23 is in the non-projecting state of not projecting upward from the peg shaft 22. In the non-projecting state, the engagement portion 23a does not project upward from the recess portion 22a and the engagement portion 23a is positioned at a position not projecting upward from the peg shaft 22. With the positioning member 23 in the non-projecting state, when the yarn feeding package 10 hung at a tip side position of the peg shaft 22 is caused to move slidably in the axis direction of the peg shaft 22 from a tip side position of the peg shaft 22 to the second position P2, the yarn feeding package 10 move slidably along the peg shaft 22 without causing abutting contact between the bobbin 10a of the yarn feeding package 10 and the positioning member 23. Further, when the yarn feeding package 10 hung at the second position P2 of the peg shaft 22 is caused to move slidably in the axis direction of the peg shaft 22 from the second position P2 to the first position P1, the yarn feeding package 10 can also move slidably to the first position P1 along the peg shaft 22 without causing abutting contact between the bobbin 10a of the yarn feeding package 10 and the positioning member 23. As a result, as the positioning member 23 does not project upward from the peg shaft 22 with the positioning member 23 in the non-projecting state, the yarn feeding package 10 can move freely between the first position P1 and the second position P2 along the peg shaft 22.

At the positioning member 23, the weight portion 23b is provided as a portion that is placed below the rotary shaft 28. The weight portion 23b is provided as a portion heavier than the engagement portion 23a. Thus, without action of external force, the positioning member 23 attached to the peg shaft 22 rotatably about the rotary shaft 28 is at a stabilized posture with the weight portion 23b at a lower position as shown in (A) of FIG. 9. In this state, the engagement portion 23a is arranged inside the recess portion 22a of the peg shaft 22 and hidden in the recess portion 22a so does not project upward of the recess portion 22a of the peg shaft 22. Specifically, without action of external force, the positioning member 23 does not project upward from the recess portion 22a and the positioning member 23 is in the non-projecting state of not projecting upward from the peg shaft 22. On the other hand, when an operator operates the weight portion 23b with a hand to rotate the positioning member 23 about the rotary shaft 28, the engagement portion 23a projects from the recess portion 22a to be put into a state of projecting upward of the peg shaft 22. Putting the engagement portion 23a into a state of projecting upward of the peg shaft 22 makes the engagement portion 23a engaged with the yarn feeding package 10 hung at the first position P1 of the peg shaft 22. In this state, namely, in a state where the positioning member 23 projects upward from the recess portion 22a, the positioning member 23 is in the projecting state of projecting upward from the peg shaft 22 thereby to be engaged with the yarn feeding package 10 hung at the first position P1. In the projecting state, the engagement portion 23a projects upward from the recess portion 22a and the engagement portion 23a is at a position projecting upward from the peg shaft 22. As the positioning member 23 projects upward from the peg shaft 22 when the positioning member 23 is in the projecting state, it is possible to hang the yarn feeding package 10 on the peg shaft 22 while positioning the yarn feeding package 10 at each of the first position P1 and the second position P2.

The abutting portion 23c is provided at a lower end of the positioning member 23 as a portion projecting from the weight portion 23b. The abutting portion 23c is provided as a portion that can abut an outer peripheral surface of a lower half of the peg shaft 22. More specifically, as shown in (C) of FIG. 9, the abutting portion 23c is configured to abut the outer peripheral surface of the lower half of the peg shaft 22 when the engagement portion 23a projects upward from the peg shaft 22 in response to operation on the weight portion 23b by an operator and the yarn feeding package 10 hung at the first position P1 of the peg shaft 22 is engaged with the engagement portion 23a. While the abutting portion 23c abuts the outer peripheral surface of the lower half of the peg shaft 22, the rotation of the positioning member 23 is restricted by the outer periphery of the peg shaft 22. This prevents rotation of the positioning member 23 even if the yarn feeding package 10 hung at the first position P1 and engaged with the engagement portion 23a tries to move slidably toward the second position P2. Thus, the yarn feeding package 10 is maintained in a state of being engaged with the engagement portion 23a to restrict slidably moving of the yarn feeding package 10 toward the second position P2.

As shown in (A) of FIG. 9, without action of external force, the positioning member 23 including the above-described engagement portion 23a, weight portion 23b, and abutting portion 23c is in a state where the engagement portion 23a is arranged inside the recess portion 22a and hidden in the recess portion 22a so the positioning member 23 does not project upward of the peg shaft 22. Namely, the positioning member 23 is in the non-projecting state of not projecting upward from the peg shaft 22. Thus, in causing the yarn feeding package 10 to move slidably from the tip of the peg shaft 22 to the second position P2 and causing the yarn feeding package 10 to move slidably from the second position P2 to the first position P1, the yarn feeding package 10 can move slidably in the axis direction of the peg shaft 22 without forming abutting contact between the bobbin 10a of the yarn feeding package 10 and the positioning member 23. FIG. 9 shows a state (B) where the yarn feeding package 10 hung at the second position P2 moves slidably in the axis direction of the peg shaft 22 from the second position P2 to the first position P1. As the engagement portion 23a is arranged in the recess portion 22a so does not project upward during slidably moving of the yarn feeding package 10, the yarn feeding package 10 moves slidably in the axis direction of the peg shaft 22 without forming abutting contact of the bobbin 10a with the positioning member 23. As described above, the positioning member 23 is configured to allow slidably moving of the yarn feeding package 10 when the yarn feeding package 10 is to move slidably in the axis direction of the peg shaft 22 from the second position P2 to the first position P1.

When the yarn feeding package 10 is in a state of having passed over the positioning member 23 in response to the movement from the second position P2 toward the first position P1, the weight portion 23b is operated by an operator with a hand to cause the positioning member 23 to rotate about the rotary shaft 28 in an anticlockwise direction in (A) of FIG. 9. In response to this rotary operation, the engagement portion 23a projects from the recess portion 22a so the positioning member 23 is in a state of projecting upward from the peg shaft 22. Specifically, the positioning member 23 is in the projecting state of projecting upward from the peg shaft 22 thereby to be engaged with the yarn feeding package 10 hung at the first position P1. In this state, when the yarn feeding package 10 becomes hung at the first position P1 of the peg shaft 22, the positioning member 23 is engaged at the engagement portion 23a with an end of the bobbin 10a of the yarn feeding package 10 as shown in (C) of FIG. 9. While the bobbin 10a of the yarn feeding package 10 and the engagement portion 23a are engaged with each other, the abutting portion 23c abuts the outer peripheral surface of the lower half of the peg shaft 22 to restrict rotation of the positioning member 23 in the anticlockwise direction in (C) of FIG. 9. Thus, even if the yarn feeding package 10 hung at the first position P1 tries to move slidably to the second position P2, the positioning member 23 does not rotate so the yarn feeding package 10 is maintained engaged with the engagement portion 23a. In such a manner, slidably moving of the yarn feeding package 10 toward the second position P2 is restricted. As described above, the positioning member 23 is provided to allow restriction on slidably moving of the yarn feeding package 10 by making engagement with the yarn feeding package 10 when the yarn feeding package 10 is caused to move from the first position P1 to the second position P2.

The following explains how the above-described yarn feeding package conveying carriage 1 is used. In supplying the yarn feeding package 10 to the creel stand 13, the yarn feeding package conveying carriage 1 conveys the plurality of yarn feeding packages 10 loaded to the yarn feeding package conveying carriage 1. The yarn feeding package 10 is loaded to the yarn feeding package conveying carriage 1 by being hung at the peg shaft 22 of the yarn feeding package conveying carriage 1. An operator conducts work of hanging the yarn feeding package 10 on the peg shaft 22. With the peg shaft 22 inserted into the bobbin 10a of the yarn feeding package 10, the yarn feeding package 10 is hung at the peg shaft 22 by the operator. The yarn feeding package 10 is hung at the peg shaft 22 at each of the first position P1 and the second position P2.

First, the yarn feeding package 10 is hung at the second position P2 of the peg shaft 22. Next, the yarn feeding package 10 is hung at the first position P1. In hanging the yarn feeding package 10 at the second position P2, the yarn feeding package 10 is caused to move slidably from the tip of the peg shaft 22 to the second position P2 with the bobbin 10a inserted into the peg shaft 22. At this time, as the positioning member 23 is in the non-projecting state of not projecting upward of the peg shaft 22, the yarn feeding package 10 slides in the axis direction of the peg shaft 22 to the second position P2 without abutting the positioning member 23 to be hung at the second position P2 of the peg shaft 22. Next, in hanging the yarn feeding package 10 at the first position P1, the yarn feeding package 10 is caused to move slidably from the tip of the peg shaft 22 to a position in the vicinity of the first position P1 with the bobbin 10a inserted into the peg shaft 22. After the yarn feeding package 10 is caused to move to the position in the vicinity of the first position P1, the positioning member 23 is caused to rotate. In such a manner, the positioning member 23 is operated in such a manner as to be switched in a state from the non-projecting state to the projecting state where the positioning member 23 projects upward from the peg shaft 22. In this state, the yarn feeding package 10 is caused to move to the first position P1 and the engagement portion 23a of the positioning member 23 abuts the bobbin 10a of the yarn feeding package 10. As a result, the yarn feeding package 10 hung at the first position P1 of the peg shaft 22 is engaged with the positioning member 23 to be positioned at the first position P1.

When the yarn feeding package conveying carriage 1 is loaded with the plurality of yarn feeding packages 10, the yarn feeding package conveying carriage 1 is caused to move to the carriage stop position S that is the region for the creel robot 15 to conduct work of extracting the yarn feeding package 10 from the yarn feeding package conveying carriage 1. The operator pushes the carriage body 21 so that the yarn feeding package conveying carriage 1 travels, and thereby it can move. When the yarn feeding package conveying carriage 1 loaded with the yarn feeding package 10 is caused to move and stop at the carriage stop position S, the creel robot 15 is actuated to conduct the work of extracting the yarn feeding package 10 from the yarn feeding package conveying carriage 1.

During extraction of the yarn feeding package 10 from the yarn feeding package conveying carriage 1 by the creel robot 15, the yarn feeding package 10 hung at the first position P1 of the peg shaft 22 is extracted by the yarn feeding changer 17 of the creel robot 15. At this time, the yarn feeding package holding members 17d in a pair of the package holder 17a of the yarn feeding changer 17 of the creel robot 15 are inserted into the bobbin 10a of the yarn feeding package 10 hung at the first position P1 in such a manner as to be interposed between the two peg shafts 22 on which the yarn feeding package 10 is hung at the first position P1. Then, the creel robot 15 is actuated to cause the yarn feeding package holding members 17d in a pair interposed between the two peg shafts 22 in the bobbin 10a of the yarn feeding package 10 hung at the first position P1 to move up. In response to moving up of the yarn feeding package holding members 17d in a pair, the yarn feeding package 10 hung at the first position P1 of the peg shaft 22 is lifted from the peg shaft 22. Next, the creel robot 15 is actuated to retreat the yarn feeding package holding members 17d in a pair of the package holder 17a. As a result, the yarn feeding package 10 lifted at the first position P1 of the peg shaft 22 and supported with the yarn feeding package holding members 17d in a pair is extracted from the peg shaft 22.

Only the yarn feeding package 10 hung at the first position P1 of the peg shaft 22 is subjected to the motion of extracting the yarn feeding package 10 from the yarn feeding package conveying carriage 1 by the creel robot 15. In extracting the yarn feeding package 10 hung at the second position P2 of the peg shaft 22 from the yarn feeding package conveying carriage 1, work of causing the yarn feeding package 10 hung at the second position P2 to move to the first position P1 is conducted before implementation of the motion of extracting the yarn feeding package 10. The operator conducts the work of causing the yarn feeding package 10 from the second position P2 to move to the first position P1 by causing the yarn feeding package 10 hung at the second position P2 to move slidably in the axis direction of the peg shaft 22.

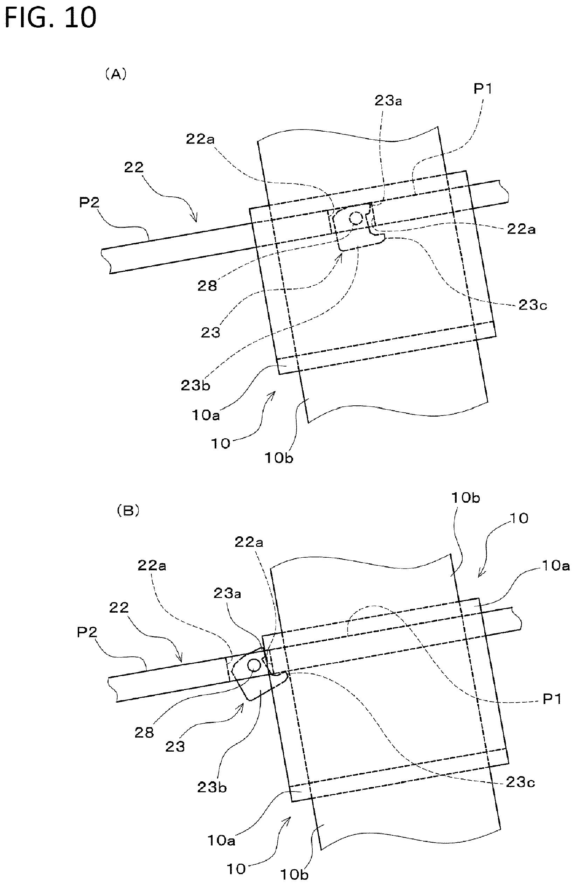

FIG. 10 is an explanatory side view of the motion of the positioning member 23 when the yarn feeding package 10 hung at the peg shaft 22 moves from the second position P1 to the first position P1 of the peg shaft 22. FIG. 10 shows the positioning member 23, a part of the peg shaft 22, and a part of the yarn feeding package 10 in an enlarged manner. FIG. 10 shows a state (A) where the yarn feeding package 10 is moving from the second position P2 to the first position P1 of the peg shaft 22. FIG. 10 shows a state (B) where the yarn feeding package 10 has moved from the second position P2 to the first position P1.

In causing the yarn feeding package 10 to move from the second position P2 to the first position P1, the operator causes the yarn feeding package 10 hung at the second position P2 to move slidably in the axis direction of the peg shaft 22 toward the first position P1. At this time, as no yarn feeding package 10 is hung at the first position P1 and no external force acts on the positioning member 23, the positioning member 23 is in the non-projecting state of not projecting upward of the peg shaft 22. In this state, the yarn feeding package 10 hung at the second position P2 moves slidably toward the first position P1. Thus, as shown in (A) of FIG. 10, the yarn feeding package 10 moves slidably in the axis direction of the peg shaft 22 without abutting the positioning member 23.

When the yarn feeding package 10 is in a state of having passed over the positioning member 23 in response to moving slidably from the second position P2 toward the first position P1, the positioning member 23 is caused to rotate. In such a manner, the positioning member 23 is operated in such a manner as to be switched in a state from the non-projecting state to the projecting state where the positioning member 23 projects upward from the peg shaft 22. In this state, the yarn feeding package 10 is caused to move to the first position P1. Then, as shown in (B) of FIG. 10, an end of the bobbin 10a of the yarn feeding package 10 having become hung at the first position P1 is engaged with the engagement portion 23a. While the bobbin 10a of the yarn feeding package 10 and the engagement portion 23a are engaged with each other, the abutting portion 23c abuts the outer peripheral surface of the lower half of the peg shaft 22 to restrict rotation of the positioning member 23. Thus, even if the yarn feeding package 10 hung at the first position P1 tries to move slidably toward the second position P2, the yarn feeding package 10 is maintained in a state of being engaged with the engagement portion 23a and hung at the first position P1. As a result, the yarn feeding package 10 having moved slidably from the second position P2 to the first position P1 is maintained in a state of being hung at the first position P1.

The creel robot 15 makes the motion of extracting the yarn feeding package 10 hung at the first position P1 after moving slidably from the second position P2 to the first position P1.

As described above, according to the yarn feeding package conveying carriage 1 of this embodiment, the yarn feeding package 10 of the plurality of yarn feeding packages 10 hung at the first position P1 closer to a tip of the peg shaft 22 is engaged with the positioning member 23 so as to be positioned. This allows the yarn feeding package 10 to be positioned at a predetermined extraction position in the axis direction of the peg shaft 22 where the yarn feeding package 10 is to be extracted by the yarn feeding package extraction device such as the creel robot 15, thereby facilitating extraction of the yarn feeding package 10. Further, the yarn feeding package 10 hung at the second position P2 of the peg shaft 22 closer to the carriage body 21 can be caused to move to the first position P1 and engaged with the positioning member 23 after extraction of the yarn feeding package 10 closer to a tip of the peg shaft 22. Thus, the yarn feeding package 10 having been caused to move from the second position P2 to the first position P1 can also be positioned at the predetermined extraction position and extracted easily. As a result, it is possible to position each of the plurality of yarn feeding packages 10 aligned along an axis direction of the peg shaft 22 at the predetermined extraction position in the axis direction of the peg shaft 22. This allows the yarn feeding package 10 to be hung at each of the first position P1 and the second position P2 and allows every yarn feeding package 10 at each of the first position P1 and the second position P2 to be positioned at the predetermined extraction position. As a result, it is possible to facilitate extraction of the plurality of yarn feeding packages 10. Further, every yarn feeding package 10 can be positioned at the predetermined extraction position in the simple configuration of providing the positioning member 23 to the peg shaft 22 between the first position P1 and the second position P2. This makes it possible to suppress complications of the configuration and increases in manufacturing cost for the yarn feeding package conveying carriage 1. As a result, according to the yarn feeding package conveying carriage 1 of this embodiment, it is possible to position each of the plurality of yarn feeding packages 10 aligned along an axis direction of the peg shaft 22 at the predetermined extraction position in the axis direction of the peg shaft 22 and suppress complications of the configuration and increases in manufacturing cost.

According to the yarn feeding package conveying carriage 1 of this embodiment, when the positioning member 23 is in the projecting state, the engagement portion 23a of the positioning member 23 projects upward from the peg shaft 22. This makes it possible to hang the yarn feeding package 10 on the peg shaft 22 while positioning the yarn feeding package 10 at each of the first position P1 and the second position P2. When the positioning member 23 is in the non-projecting state, the engagement portion 23a of the positioning member 23 does not project upward from the peg shaft 22. This allows the yarn feeding package 10 to move freely between the first position P1 and the second position P2 along the peg shaft 22.

Further, according to the yarn feeding package conveying carriage 1 of this embodiment, the positioning member 23 is arranged so as to be switchable between in the projecting state and in the non-projecting state, in any of both cases where the yarn feeding package 10 is hung and not hung at the second position P2. Therefore, according to the yarn feeding package conveying carriage 1 of this embodiment, as a result of putting the positioning member 23 into the non-projecting state when the yarn feeding package 10 is in a state of being hung at the second position P2, it is possible to cause the yarn feeding package 10 to move freely from the second position P2 to the first position P1 along the peg shaft 22 while overcoming the positioning member 23 at the peg shaft 22. Subsequently, as a result of putting the positioning member 23 into the projecting state after having caused the yarn feeding package 10 to move to the first position P1, it is possible to position the yarn feeding package 10 thereby to hang it at the second position P2 of the peg shaft 22. Further, as a result of putting the positioning member 23 into the non-projecting state when the yarn feeding package 10 is in a state of not being hung at the second position P2, it is possible to cause the yarn feeding package 10 to move freely from the first position P1 to the second position P2 along the peg shaft 22 while overcoming the positioning member 23 at the peg shaft 22, thereby to hang it at the second position P2 of the peg shaft 22. Still further, as a result of putting the positioning member 23 into the projecting state when the yarn feeding package 10 is in a state of not being hung at the second position P2, it is possible to cause the yarn feeding package 10 to be engaged with the positioning member 23 so as to position the yarn feeding package 10 thereby to hang it at the first position P1 of the peg shaft 22. It is therefore possible to position the yarn feeding package 10 thereby to hang it at the first position P1 of the peg shaft 22 irrespective of whether the yarn feeding package 10 is in a state of being hung at the second position P2 or not being hung at the second position P2.

The yarn feeding package conveying carriage 1 of this embodiment includes the plurality of peg shafts 22 arranged in such a manner as to extend from the carriage body 21. This makes it possible to hang the plurality of yarn feeding packages 10 on each of the plurality of peg shafts 22 at one carriage body 21, allowing the yarn feeding package conveying carriage 1 to be loaded with and used for conveying a large number of the yarn feeding packages 10.

According to the yarn feeding package conveying carriage 1 of this embodiment, it is possible to hang one or more yarn feeding packages 10 at the second position P2. Thus, many yarn feeding packages 10 such as two or more can be hung at one peg shaft 22. This allows the yarn feeding package conveying carriage 1 to be loaded with and used for conveying a large number of the yarn feeding packages 10.

According to the yarn feeding package conveying carriage 1 of this embodiment, the peg shaft 22 extends diagonally upward from the carriage body 21. Thus, even if external force acts on the yarn feeding package conveying carriage 1 to cause, e.g., vibration, it is still possible to more reliably reduce the occurrence of drop of the yarn feeding package 10 hung at the peg shaft 22. Further, the yarn feeding package 10 hung at the first position P1 is engaged with the positioning member 23 in a state of being biased by gravity in the axis direction of the peg shaft 22 toward the carriage body 21. This allows the yarn feeding package 10 hung at the first position P1 closer to a tip of the peg shaft 22 thereby to be reliably engaged with the positioning member 23 and to be positioned at the determined position stably. As a result of the upward projection of the peg shaft 22, the yarn feeding package 10 hung at the peg shaft 22 is supported stably by its own weight (self-weight) on the peg shaft 22. In the absence of the positioning member 23 at the peg shaft 22, however, abutting contact is caused between the plurality of yarn feeding packages 10 hung at the peg shaft 22 to cause the self-weight of the yarn feeding package 10 closer to the tip of the peg shaft 22 to exert action. This imposes difficulty in extracting the yarn feeding package 10 closer to the tip. According to the yarn feeding package conveying carriage 1 of this embodiment, however, the peg shaft 22 extends upward and the positioning member 23 to be engaged with the yarn feeding package 10 hung at the first position P1 is provided. This prevents the yarn feeding package 10 hung at the first position P1 of the peg shaft 22 from abutting the yarn feeding package 10 hung at the second position P2 of the peg shaft 22, making it possible to easily extract the yarn feeding package 10 hung at the first position P1 closer to the tip of the peg shaft 22.

According to the yarn feeding package conveying carriage 1 of this embodiment, the creel robot 15 extracts the yarn feeding package 10 of the plurality of yarn feeding packages 10 hung at the first position P1 closer to the tip of the peg shaft 22 and engaged with the positioning member 23 so as to be positioned. Specifically, the first position P1 is the predetermined extraction position for the creel robot 15 to extract the yarn feeding package 10 from the peg shaft 22. The yarn feeding package 10 hung at the second position P2 of the peg shaft 22 closer to the carriage body 21 can be caused to move to the first position P1 and engaged with the positioning member 23 after extraction of the yarn feeding package 10 closer to the tip of the peg shaft 22. Thus, the yarn feeding package 10 having been caused to move from the second position P2 to the first position P1 can also be positioned at the predetermined extraction position and extracted easily by the creel robot 15. As a result, it is possible to position each of the plurality of yarn feeding packages 10 aligned along an axis direction of the peg shaft 22 at the predetermined extraction position for extraction by the creel robot 15 in the axis direction of the peg shaft 22. Further, a configuration facilitating extraction of the plurality of yarn feeding packages 10 by the creel robot 15 can be realized without the need of providing the creel robot 15 with particular equipment for extraction of the yarn feeding package 10 by the creel robot 15.

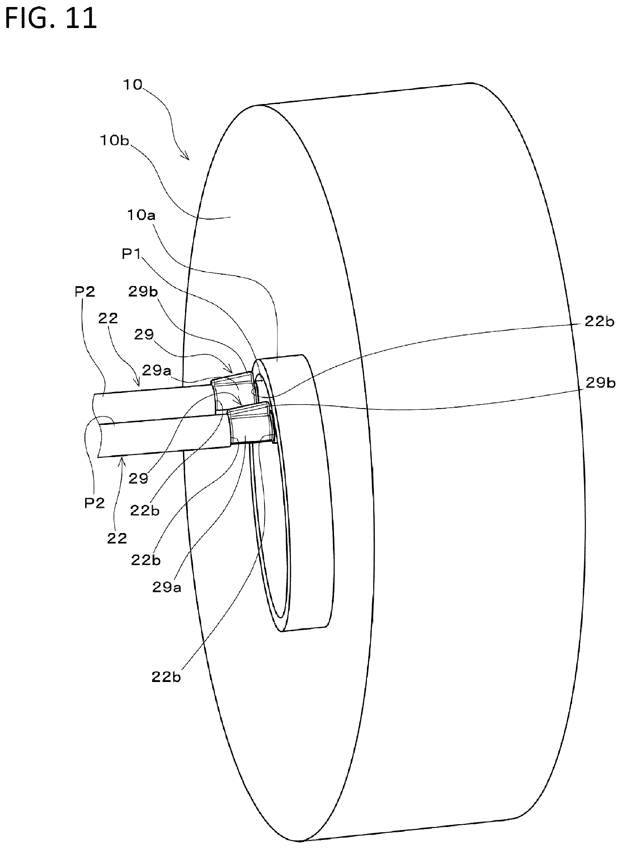

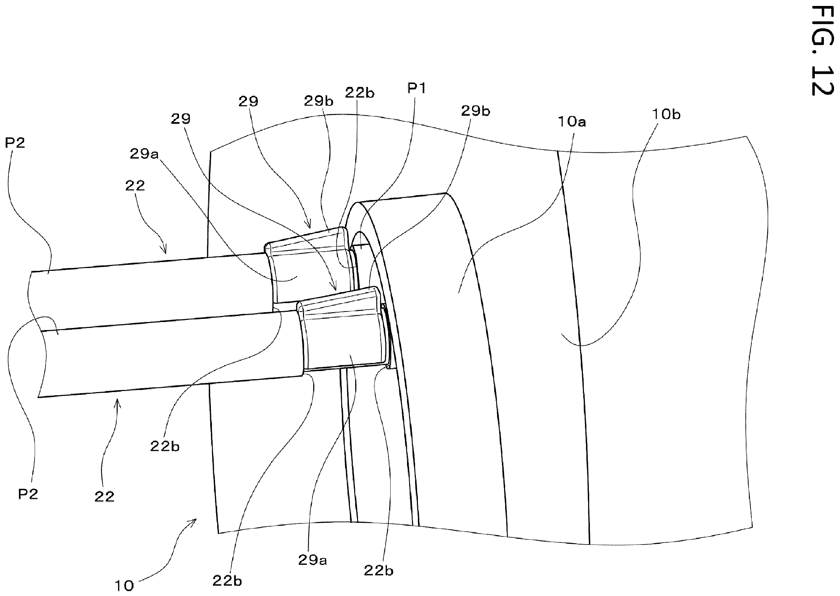

While this embodiment of the present invention has been described above, the present invention is not limited to the above-described embodiment but can be changed in various ways within a scope recited in the claims. For example, the following changes may be added in carrying out the present invention.
[1] In the exemplary configuration in the above-described embodiment, the peg shaft cantilever-like extends diagonally upward from the carriage body. However, this configuration is not always required. In an alternative configuration, the peg shaft may be arranged so as to cantilever-like extend in the horizontal direction from the carriage body.
[2] In the exemplary configuration in the above-described embodiment, the positioning member is rotatably attached to the peg shaft. However, this configuration is not always required. In an alternative configuration, the positioning member may be attached fixedly to the peg shaft in a non-rotatable state.
[3] In the exemplary configuration in the above-described embodiment, the positioning member is attached to the peg shaft rotatably about the rotary shaft with respect to a direction conforming to a direction perpendicular to the axis direction of the peg shaft. However, this configuration is not always required. In an alternative configuration, the positioning member may be attached to the peg shaft by being fitted to the peg shaft slidably in a peripheral direction of the peg shaft. A configuration where the positioning member is attached to the peg shaft by being fitted to the peg shaft slidably in the peripheral direction of the peg shaft may be carried out as a yarn feeding package conveying carriage according to a modified embodiment shown in, e.g., FIGS. 11 and 12.

FIG. 11 is an explanatory perspective view of a yarn feeding package conveying carriage according to a modified embodiment of the present application, of which the peg shaft 22 and a positioning member 29 of the yarn feeding package conveying carriage according to the modified embodiment of the present invention are shown in an enlarged manner. FIG. 12 is a perspective view showing a part of FIG. 11 in an enlarged manner. In an exemplary state shown in FIGS. 11 and 12, the yarn feeding package 10 is hung at the first position P1 of the peg shaft 22 and no yarn feeding package 10 is hung at the second position P2. In the following explanation of a modified embodiment, an element having the same configuration as that of the above-described embodiment and an element having a corresponding configuration to that of the above-described embodiment are given the same signs in the drawings or assigned with the same signs to omit descriptions of such elements.

The yarn feeding package conveying carriage according to a modified embodiment shown in FIGS. 11 and 12 has a similar configuration to the yarn feeding package conveying carriage 1 of the above-described embodiment. However, the yarn feeding package conveying carriage according to the modification differs from the yarn feeding package conveying carriage 1 of the above-described embodiment in the configuration of the positioning member 29 and a configuration of attaching the positioning member 29 to the peg shaft 22.

As shown in FIGS. 11 and 12, at the yarn feeding package conveying carriage according to a modified embodiment, the peg shaft 22 is arranged with a groove 22b formed at a position where the positioning member 29 is attached and extending in a peripheral direction about the axis of the peg shaft 22. The groove 22b is arranged as the region where the peg shaft 22 is partially reduced in diameter in the axis direction of the peg shaft 22 to form a step-like recess at the outer periphery of the peg shaft 22. The groove 22b is arranged in such a manner as to extend along the entire periphery of the peg shaft 22 in the peripheral direction about the axis of the peg shaft 22.

Like the positioning member 23 of the above-described embodiment, the positioning member 29 is provided to the peg shaft 22 and attached to the peg shaft 22 in a state of not moving in the axis direction of the peg shaft 22 between the first position P1 and the second position P2 in the axis direction of the peg shaft 22. Further, the positioning member 29 is provided between the first position P1 and the second position P2 in the axis direction of the peg shaft 22 in such a manner as to be engaged with the yarn feeding package 10 hung at the first position P1 to position the yarn feeding package 10 at the first position P1. The positioning member 29 is provided in such a manner as to be switchable between in a projecting state of projecting upward from the peg shaft 22 thereby to be engaged with the yarn feeding package 10 hung at the first position P1 and in a non-projecting state of not projecting upward from the peg shaft 22. Still further, the positioning member 29 is arranged so as to be switchable between in the projecting state and in the non-projecting state, in any of both cases where the yarn feeding package 10 is hung and not hung at the second position P2. Unlike the positioning member 23 of the above-described embodiment, the positioning member 29 is provided with an attached portion 29a attached to the peg shaft 22 while being fitted into the groove 22b of the peg shaft 22 slidably in the peripheral direction of the peg shaft 22, and a convex portion 29b projecting from the attached portion 29a.

The attached portion 29a is provided as a circular cylindrical portion with a partial opening formed in the peripheral direction. The attached portion 29a as the circular cylindrical portion with the partial opening formed in the peripheral direction has an inner diameter dimension determined in response to the diameter dimension of the portion of the peg shaft 22 corresponding to the groove 22b. In such a manner, the attached portion 29a is formed into a shape fitted into the groove 22b of the peg shaft 22 slidably in the peripheral direction of the peg shaft 22. In the region where the circular cylindrical attached portion 29a has the partial opening formed in the peripheral direction, the opening extends over an arc angle slightly smaller than that of a half of a semicircle in the peripheral direction, for example. In such a manner, the attached portion 29a is configured to be fitted into the groove 22b of the peg shaft 22 while extending over a region of an arc angle slightly larger than that of a half of the outer periphery of the groove 22b. Thus, the attached portion 29a is configured not to come off the groove 22b while being fitted slidably into the groove 22b of the peg shaft 22. Further, as the attached portion 29a is provided slidably in the peripheral direction relative to the groove 22b of the peg shaft 22, the attached portion 29a is configured to slide along the groove 22b to rotate relative to the peg shaft 22. The positioning member 29 is provided in such a manner as to be switched in a state between the projecting state of projecting upward from the peg shaft 22 and the non-projecting state of not projecting upward from the peg shaft 22 in response to sliding motion of the attached portion 29a along the groove 22b and rotation of the attached portion 29a relative to the peg shaft 22.

The attached portion 29a as the circular cylindrical portion with the partial opening formed in the peripheral direction has a dimension in a circular cylindrical axis direction that is determined slightly smaller than the length dimension of the groove 22b in the axis direction of the peg shaft 22. Thus, even if the attached portion 29a fitted into the groove 22b of the peg shaft 22 slidably in the peripheral direction tries to move in the axis direction of the peg shaft 22, the attached portion 29a abuts an edge of the groove 22b to restrict movement of the attached portion 29a in the axis direction of the peg shaft 22. In such a manner, the positioning member 29 is configured to be attached to a position between the first position P1 and the second position P2 in the axis direction of the peg shaft 22 and at which the positioning member 29 can be engaged with the yarn feeding package 10 hung at the first position P1.

The positioning member 29 is formed elastically deformable using, e.g., a resin material. Thus, when the attached portion 29a is to be attached by being fitted into the groove 22b of the peg shaft 22, the attached portion 29a is fitted in such a manner as to be pressed against the groove 22b. In such a manner, the attached portion 29a can be attached to the groove 22b after being elastically deformed once. Specifically, the attached portion 29a can be increased in diameter once by being pressed against the groove 22b to be elastically deformed, and then can be pressed into the groove 22b. After being pressed into the groove 22b, the attached portion 29a elastically recovers to be fitted into the groove 22b and attached slidably to the groove 22b.

The convex portion 29b is provided as a portion integral with the attached portion 29a and projecting from the attached portion 29a. The convex portion 29b is provided as a portion projecting like a boss or a plate from the attached portion 29a, for example. The convex portion 29b is provided as a portion capable of being engaged with the yarn feeding package 10 hung at the first position P1 while the attached portion 29a is attached to the peg shaft 22. While the attached portion 29a is attached to the groove 22b of the peg shaft 22, the convex portion 29b is arranged in a state of projecting outward of the peg shaft 22 from the groove 22b. When the attached portion 29a fitted into the groove 22b of the peg shaft 22 slidably in the peripheral direction is caused to rotate relative to the peg shaft 22 to be adjusted properly in position in the peripheral direction of the peg shaft 22, the convex portion 29b is put into a state of projecting upward of the peg shaft 22. In a state where the position of the attached portion 29a in the peripheral direction about the peg shaft 22 is adjusted and the convex portion 29b projects upward, the positioning member 29 is in the projecting state of projecting upward from the peg shaft 22 thereby to be engaged with the yarn feeding package 10 hung at the first position P1. Specifically, in the projecting state, the attached portion 29a is attached to the peg shaft 22 while the convex portion 29b projects upward and the convex portion 29b is engaged with the yarn feeding package 10 hung at the first position P1. As the positioning member 29 projects upward from the peg shaft 22 when the positioning member 29 is in the projecting state, it is possible to hang the yarn feeding package 10 on the peg shaft 22 while positioning the yarn feeding package 10 at each of the first position P1 and the second position P2.

The convex portion 29b is also put into a state of not projecting upward from the peg shaft 22 in response to the operation of causing the attached portion 29a to rotate relative to the peg shaft 22 to properly adjust the position of the attached portion 29a in the peripheral direction of the peg shaft 22. When the convex portion 29b is put into a state of not projecting upward from the peg shaft 22 in response to the adjustment of the position of the attached portion 29a in the peripheral direction about the peg shaft 22, the positioning member 29 is in the non-projecting state of not projecting upward from the peg shaft 22. Specifically, in the non-projecting state, the attached portion 29a is attached to the peg shaft 22 while the convex portion 29b does not project upward. As the positioning member 29 does not project upward from the peg shaft 22 when the positioning member 29 is in the non-projecting state, the yarn feeding package 10 is allowed to move freely between the first position P1 and the second position P2 along the peg shaft 22. For example, in causing the yarn feeding package 10 hung at the second position P2 of the peg shaft 22 to move slidably in the axis direction of the peg shaft 22 to the first position P1, the attached portion 29a is caused to rotate. At this time, the attached portion 29a is operated so as to switch a state of the positioning member 29 from the projecting state where the convex portion 29b projects upward from the peg shaft 22 to the non-projecting state where the convex portion 29b does not project upward from the peg shaft 22. This allows the yarn feeding package 10 hung at the second position P2 to pass through the positioning member 29 fitted into the groove 22b of the peg shaft 22 without abutting the convex portion 29b and to move slidably in the axis direction of the peg shaft 22 to the first position P1.

As described above, the positioning member 29 is provided with the attached portion 29a and the convex portion 29b. The attached portion 29a is provided in such a manner as to be fitted into the groove 22b of the peg shaft 22 slidably in the peripheral direction and to be attached to the peg shaft 22 rotatably. The convex portion 29b projects from the attached portion 29a, and is provided in such a manner as to project from the peg shaft 22 while the attached portion 29a is attached to the peg shaft 22 so as to be engaged with the yarn feeding package 10 hung at the first position P1. Thus, the positioning member 29 is configured in such a manner that, when the attached portion 29a is attached to the peg shaft 22 in the projecting state where the convex portion 29b projects upward, the convex portion 29b is engaged with the yarn feeding package 10 hung at the first position P1. The positioning member 29 is also configured in such a manner that, when the attached portion 29a is attached to the peg shaft 22 in the non-projecting state where the convex portion 29b does not project upward, the yarn feeding package 10 is freely movable along the peg shaft 22 between the first position P1 and the second position P2.

The yarn feeding package conveying carriage of the above-described modified embodiment can achieve effects comparable to those of the above-described embodiment. Specifically, the yarn feeding package conveying carriage of the above-described modified embodiment makes it possible to positioned each of the plurality of yarn feeding packages 10 aligned along an axis direction of the peg shaft 22 at the extraction position for extraction by the creel robot 15 in the axis direction of the peg shaft 22 and to suppress complications of the configuration and increases in manufacturing cost.

According to the yarn feeding package conveying carriage of the above-described modified embodiment, when the positioning member 29 is in the projecting state, the convex portion 29b of the positioning member 29 projects upward from the peg shaft 22. This makes it possible to hang the yarn feeding package 10 on the peg shaft 22 while positioning the yarn feeding package 10 at each of the first position P1 and the second position P2. When the positioning member 29 is in the non-projecting state, the convex portion 29b of the positioning member 29 does not project upward from the peg shaft 22. This allows the yarn feeding package 10 to move freely between the first position P1 and the second position P2 along the peg shaft 22.

Further, according to the yarn feeding package conveying carriage of the above-described modified embodiment, the positioning member 29 is arranged so as to be switchable between in the projecting state and in the non-projecting state, in any of both cases where the yarn feeding package 10 is hung and not hung at the second position P2. Therefore, according to the yarn feeding package conveying carriage of the above-described modified embodiment, as a result of putting the positioning member 29 into the non-projecting state when the yarn feeding package 10 is in a state of being hung at the second position P2, it is possible to cause the yarn feeding package 10 to move freely from the second position P2 to the first position P1 along the peg shaft 22 while overcoming the positioning member 29 at the peg shaft 22. Subsequently, as a result of putting the positioning member 29 into the projecting state after having caused the yarn feeding package 10 to move to the first position P1, it is possible to position the yarn feeding package 10 thereby to hang it at the second position P2 of the peg shaft 22. Further, as a result of putting the positioning member 29 into the non-projecting state when the yarn feeding package 10 is in a state of not being hung at the second position P2, it is possible to cause the yarn feeding package 10 to move freely from the first position P1 to the second position P2 along the peg shaft 22 while overcoming the positioning member 29 at the peg shaft 22, thereby to hang it at the second position P2 of the peg shaft 22. Still further, as a result of putting the positioning member 29 into the projecting state when the yarn feeding package 10 is in a state of not being hung at the second position P2, it is possible to cause the yarn feeding package 10 to be engaged with the positioning member 29 so as to position the yarn feeding package 10 thereby to hang it at the first position P1 of the peg shaft 22. It is therefore possible to position the yarn feeding package 10 thereby to hang it at the first position P1 of the peg shaft 22 irrespective of whether the yarn feeding package 10 is in a state of being hung at the second position P2 or not being hung at the second position P2.

### (Reference Numerals)

- 1: Yarn feeding package conveying carriage
- 10: Yarn feeding package
- 10a: Bobbin
- 13: Creel stand
- 15: Creel robot
- 21: Carriage body
- 22: Peg shaft
- 23, 29: Positioning member
- P1: First position
- P2: Second position

## Claims

1. A yarn feeding package conveying carriage (1) for conveying a yarn feeding package (10) while being loaded with the yarn feeding package (10), the carriage (1) comprising:
a carriage body (21) capable of traveling;
a peg shaft (22) arranged so as to cantilever-like extend from the carriage body (21) for hanging the yarn feeding package (10) in such a manner that the peg shaft (22) is inserted into a bobbin (10a) of the yarn feeding package (10); and
a positioning member (23, 29) provided for the peg shaft (22),
wherein the peg shaft (22) has a first position (P1) and a second position (P2) set thereon aligned along an axis direction thereof each at which the yarn feeding package (10) is to be hung, and
the first position (P1) is provided at a tip side of the peg shaft (22) in the axis direction, and the second position (P2) is provided at a carriage body (21)'s side of the peg shaft (22) in the axis direction,
**characterized in that**:
the positioning member (23, 29) is attached to the peg shaft (22) immovably in the axis direction between the first position (P1) and the second position (P2) aligned along the axis direction to be arranged in such a manner that the positioning member (23, 29) is engaged with the yarn feeding package (10) hung at the first position (P1) so as to position the yarn feeding package (10) at the first position (P1), and
the positioning member (23, 29) is arranged so as to be switchable between in a projecting state of projecting upward from the peg shaft (22) thereby capable of being engaged with the yarn feeding package (10) hung at the first position (P1) and in a non-projecting state of not projecting upward from the peg shaft (22).

2. The yarn feeding package conveying carriage (1) as claimed in claim 1, wherein
the positioning member (23, 29) is arranged so as to be switchable between in the projecting state and in the non-projecting state, in any of both cases where the yarn feeding package (10) is hung and not hung at the second position (P2).

3. The yarn feeding package conveying carriage (1) as claimed in claim 1 or 2, wherein
the positioning member (23) is attached to the peg shaft (22) rotatably around a rotary shaft (28) extending in a direction perpendicular to the axis direction to be arranged so as to be switchable between in the projecting state and in the non-projecting state, as a result of rotating around the rotary shaft (28),
the positioning member (23) includes an engagement portion (23a) capable of projecting upward from the peg shaft (22) thereby capable of being engaged with the yarn feeding package (10) hung at the first position (P1),
the engagement portion (23a) is at a position projecting upward from the peg shaft (22) in the projecting state, and is at a position not projecting upward from the peg shaft (22) in the non-projecting state, and
the positioning member (23) is in the non-projecting state without any external force being exerted, and is put into the projecting state upon any operation of rotation being performed.

4. The yarn feeding package conveying carriage (1) as claimed in claim 1 or 2, wherein
the peg shaft (22) is formed with a groove (22b) thereon along a peripheral direction around an axis thereof,
the positioning member (29) includes an attachment portion (29a) attached to the peg shaft (22) to be fit into the groove (22b) slidably along the peripheral direction, and a convex portion (29b) in a shape projecting from the attachment portion (29a),
the positioning member (29) is arranged so as to be switchable between in the projecting state and in the non-projecting state as a result of causing the attachment portion (29a) to rotate slidably along the groove (22b) around the peg shaft (22),
in the projecting state, the attachment portion (29a) is attached to the peg shaft (22) such that the convex portion (29b) is in a state of projecting upward from the peg shaft (22) to be engaged with the yarn feeding package (10) hung at the first position (P1), and
in the non-projecting state, the attachment portion (29a) is attached to the peg shaft (22) such that the convex portion (29b) is in a state of not projecting upward from the peg shaft (22).

5. The yarn feeding package conveying carriage (1) as claimed in any one of claims 1 to 4, wherein
the peg shaft (22) includes a plurality of peg shafts (22), and the plurality of peg shafts (22) cantilever-like extend from the carriage body (21).

6. The yarn feeding package conveying carriage (1) as claimed in any one of claims 1 to 5, wherein
the yarn feeding package (10) includes one yarn feeding package (10) or a plurality of yarn feeding packages (10), and the second position (P2) is set as a position at which the one yarn feeding package (10) is to be hung or the plurality of yarn feeding packages (10) are to be hung.

7. The yarn feeding package conveying carriage (1) as claimed in any one of claims 1 to 6, wherein
the peg shaft (22) cantilever-like extends diagonally upward from the carriage body (21).

8. The yarn feeding package conveying carriage (1) as claimed in any one of claims 1 to 7, wherein
said yarn feeding package conveying carriage (1) is a carriage for conveying a yarn feeding package (10) to be extracted and supplied to a creel stand (13) by a creel robot (15) while being loaded with the yarn feeding package (10).

## Patentansprüche

1. Fadenzufuhrpaket-Transportwagen (1) zum Transportieren eines Fadenzuführpakets (10), während er mit dem Fadenzufuhrpaket (10) beladen ist, wobei der Wagen (1) folgendes umfasst:
einen Wagenkörper (21), der zur Fortbewegung in der Lage ist;
einen Zapfenschaft (22), der so angeordnet ist, dass er sich freitragend vom Wagenkörper (21) erstreckt, zum Aufhängen des Fadenzufuhrpakets (10) auf derartige Weise, dass der Zapfenschaft (22) in eine Spule (10a) des Fadenzufuhrpakets (10) eingefügt ist; und
ein für den Zapfenschaft (22) vorgesehenes Positionierelement (23, 29),
wobei der Zapfenschaft (22) eine erste Position (P1) und eine darauf eingestellte zweite Position (P2) hat, die jeweils entlang einer Achsenrichtung davon ausgerichtet sind, in der das Fadenzufuhrpaket (10) aufgehängt werden soll, und
die erste Position (P1) an einer Spitzenseite des Zapfenschafts (22) in der Achsenrichtung vorgesehen ist und die zweite Position (P2) an einer Seite des Wagenkörpers (21) des Zapfenschafts (22) in der Achsenrichtung vorgesehen ist,
**dadurch gekennzeichnet, dass**:
das Positionierelement (23, 29) am Zapfenschaft (22) unbeweglich in der Achsenrichtung zwischen der ersten Position (P1) und der zweiten Position (P2) angebracht ist, die entlang der Achsenrichtung ausgerichtet sind, um auf derartige Weise angeordnet zu sein, dass das Positionierelement (23, 29) mit dem bei der ersten Position (P1) aufgehängten Fadenzufuhrpaket (10) in Eingriff ist, um das Fadenzufuhrpaket (10) bei der ersten Position (P1) zu positionieren, und
das Positionierelement (23, 29) so angeordnet ist, dass es zwischen in einem vorstehenden Zustand, in dem es vom Zapfenschaft (22) aus nach oben vorsteht, um dadurch in der Lage zu sein, mit dem bei der ersten Position (P1) aufgehängten Fadenzufuhrpaket (10) in Eingriff zu sein, und in einem nicht vorstehenden Zustand, in dem es von dem Zapfenschaft (22) aus nicht nach oben vorsteht, umschaltbar ist.

2. Fadenzufuhrpaket-Transportwagen (1) nach Anspruch 1, wobei
das Positionierelement (23, 29) so angeordnet ist, dass es in jedem von beiden Fällen, in denen das Fadenzufuhrpaket (10) bei der zweiten Position (P2) aufgehängt und nicht aufgehängt ist, zwischen in dem vorstehenden Zustand und in dem nicht vorstehenden Zustand umschaltbar ist.

3. Fadenzufuhrpaket-Transportwagen (1) nach Anspruch 1 oder 2, wobei
das Positionierelement (23) am Zapfenschaft (22) drehbar um einen Drehwelle (28) angebracht ist, die sich in einer Richtung senkrecht zur Achsenrichtung erstreckt, um so angeordnet zu sein, dass es als Ergebnis eines Drehens um die Drehwelle (28) zwischen im vorstehenden Zustand und im nicht vorstehenden Zustand umschaltbar ist,
das Positionierelement (23) einen Eingriffsteilbereich (23a) enthält, der in der Lage ist, vom Zapfenschaft (22) nach oben vorzustehen, um dadurch in der Lage zu sein, mit dem bei der ersten Position (P1) aufgehängten Fadenzufuhrpaket (10) in Eingriff zu sein,
der Eingriffsteilbereich (23A) im vorstehenden Zustand bei einer vom Zapfenschaft (22) nach oben vorstehenden Position ist und im nicht vorstehenden Zustand bei einer vom Zapfenschaft (22) nicht nach oben vorstehenden Position ist, und
das Positionierelement (23) im nicht vorstehenden Zustand ist, ohne dass irgendeine äußere Kraft ausgeübt wird, und daraufhin in den vorstehenden Zustand versetzt wird, dass irgendeine Drehoperation durchgeführt wird.

4. Fadenzufuhrpaket-Transportwagen (1) nach Anspruch 1 oder 2, wobei
der Zapfenschaft (22) entlang einer Umfangsrichtung um eine Achse davon mit einer Nut (22b) darauf ausgebildet ist,
das Positionierelement (29) einen Anbringungsteilbereich (29a) enthält, der am Zapfenschaft (22) angebracht ist, um verschiebbar entlang der Umfangsrichtung in die Nut (22b) eingepasst zu werden, und einen konvexen Teilbereich (29b) in einer Form, die aus dem Anbringungsteilbereich (29a) vorsteht,
das Positionierelement (29) so angeordnet ist, dass es als Ergebnis eines Veranlassens, dass sich der Anbringungsteilbereich (29a) entlang der Nut (22b) um den Zapfenschaft (22) verschiebbar dreht, zwischen in dem vorstehenden Zustand und in dem nicht vorstehenden Zustand umschaltbar ist,
der Anbringungsteilbereich (29a) im vorstehenden Zustand so am Zapfenschaft (22) angebracht ist, dass der konvexe Teilbereich (29b) in einem Zustand ist, in dem er vom Zapfenschaft (22) nach oben vorsteht, um mit dem bei der ersten Position (P1) aufgehängten Fadenzufuhrpaket (10) in Eingriff zu sein, und
der Anbringungsteilbereich (29a) im nicht vorstehenden Zustand so am Zapfenschaft (22) angebracht ist, dass der konvexe Teilbereich (29b) in einem Zustand ist, in dem er nicht vom Zapfenschaft (22) nach oben vorsteht.

5. Fadenzufuhrpaket-Transportwagen (1) nach einem der Ansprüche 1 bis 4, wobei
der Zapfenschaft (22) eine Vielzahl von Zapfenschaften (22) enthält und die Vielzahl von Zapfenschaften (22) sich freitragend vom Wagenkörper (21) erstreckt.

6. Fadenzufuhrpaket-Transportwagen (1) nach einem der Ansprüche 1 bis 5, wobei
das Fadenzufuhrpaket (10) ein Fadenzufuhrpaket (10) oder eine Vielzahl von Fadenzufuhrpaketen (10) enthält und die zweite Position (P2) als eine Position eingestellt ist, bei der das eine Fadenzufuhrpaket (10) aufgehängt werden soll oder die Vielzahl von Fadenzufuhrpaketen (10) aufgehängt werden soll.

7. Fadenzufuhrpaket-Transportwagen (1) nach einem der Ansprüche 1 bis 6, wobei
der Zapfenschaft (22) sich diagonal nach oben vom Wagenkörper (21) freitragend erstreckt.

8. Fadenzufuhrpaket-Transportwagen (1) nach einem der Ansprüche 1 bis 7, wobei
der Fadenzufuhrpaket-Transportwagen (1) ein Wagen zum Transportieren eines Fadenzufuhrpakets (10) ist, das von einem Spulengatterroboter (15) entnommen und zu einem Spulengattergestell (13) zugeführt werden soll, während er mit dem Garnzufuhrpaket (10) beladen ist.

## Revendications

1. Un chariot de transport (1), pour transporter un ensemble (10) d'alimentation en fil alors que cet ensemble est chargé sur lui, le chariot (1) comprenant :
un corps de chariot (21) apte à cheminer ;
une tige (22) formant broche, agencée en porte-à-faux depuis le corps de chariot (21) pour suspendre l'ensemble (10) d'alimentation en fil de manière à ce que la tige (22) formant broche soit insérée dans une bobine (10a) de l'ensemble (10) d'alimentation en fil ; et
un élément de positionnement (23, 29) prévu pour la tige (22) formant broche,
la tige (22) formant broche ayant une première position (P1) et une deuxième position (P2) définies sur elle, alignées le long de la direction de son axe, à chacune desquelles l'ensemble (10) d'alimentation en fil est destiné à être suspendu, et
la première position (P1) est située du côté de l'extrémité de la tige (22) formant broche dans la direction axiale, et la deuxième position (P2) est située sur le côté de la tige (22) formant broche se trouvant sur le côté du corps du chariot (21) dans la direction axiale,
**caractérisé en ce que** :
l'élément de positionnement (23, 29) est fixé à la tige (22) formant broche de manière fixe dans la direction axiale entre la première position (P1) et la deuxième position (P2), alignées le long de la direction axiale, étant agencé de telle sorte qu'il soit en engagement avec l'ensemble (10) d'alimentation en fil suspendu à la première position (P1) afin de positionner l'ensemble d'alimentation en fil (10) dans la première position (P1), et
l'élément de positionnement (23, 29) est agencé de manière à pouvoir commuter entre un état de saillie, dans lequel il fait saillie de la tige (22) formant broche, étant ainsi apte à venir en engagement avec l'ensemble (10) d'alimentation en fil suspendu dans la première position (P1), et un état de non-saillie, dans lequel il ne fait pas saillie de la tige (22) formant broche.

2. Le chariot (1) de transport d'ensemble d'alimentation en fil selon la revendication 1, dans lequel
l'élément de positionnement (23, 29) est agencé de manière à être commutable entre un état de saillie et un état de non-saillie, l'ensemble (10) d'alimentation en fil étant, dans chaque cas, suspendu ou non-suspendu dans la deuxième position (P2).

3. Le chariot (1) de transport d'ensemble d'alimentation en fil selon la revendication 1 ou la revendication 2, dans lequel
l'élément de positionnement (23) est fixé à la tige (22) formant broche de manière rotative autour d'un arbre rotatif (28) s'étendant dans une direction perpendiculaire à la direction axiale, de manière à être agencé de façon à être apte à commuter entre l'état de saillie et l'état de non-saillie, par suite de sa rotation autour de l'arbre rotatif (28),
l'élément de positionnement (23) comprenant une partie d'engagement (23a) apte à faire saillie vers le haut depuis la tige (22) formant broche, et ainsi s'engager avec l'ensemble (10) d'alimentation en fil suspendu dans la première position (P1),
la partie d'engagement (23a) est dans une position faisant saillie vers le haut depuis l'état de saillie de la tige (22) formant broche, et est dans une position de non-saillie vers le haut depuis l'état de non-saillie de la tige (22) formant broche, et
l'élément de positionnement (23) est en position de non-saillie sans qu'aucune force externe soit exercée, et est placé dans l'état de saillie lors de la réalisation de toute opération de rotation.

4. Le chariot (1) de transport d'ensemble d'alimentation en fil selon la revendication 1 ou la revendication 2, dans lequel la tige (22) formant broche présente sur elle une rainure (22b) formé selon une direction périphérique autour de son axe,
l'élément de positionnement (29) comprend une partie de fixation (29a) fixée à la tige (22) formant broche pour s'insérer dans la rainure (22b) de manière coulissante selon la direction périphérique, et une partie convexe (29b) ayant une forme telle qu'elle fait saillie de la partie de fixation (29a),
l'élément de positionnement (29) étant conçu de façon à être commutable entre l'état de saillie et l'état de non-saillie par suite du fait d'amener la partie de fixation (29a) à tourner de façon coulissante le long de la rainure (22b) autour de la tige (22) formant broche,
dans l'état de saillie, la partie de fixation (29a) est fixée à la tige (22) formant broche de telle sorte que la partie convexe (29b) est dans un état de saillie par rapport à la tige (22) formant broche, de façon à être en engagement avec l'ensemble (10) d'alimentation en fil suspendu dans la première position (P1), et
dans l'état de non-saillie, la partie de fixation (29a) est fixée à la tige (22) formant broche de sorte que la partie convexe (29b) est dans un état de non saillie vers le haut par rapport à la tige (22) formant broche.

5. Le chariot (1) de transport d'ensemble d'alimentation en fil selon l'une quelconque des revendications 1 à 4, dans lequel
la tige (22) formant broche comprend une pluralité de tiges (22) formant broches, et la pluralité de tiges (22) formant broches s'étend depuis le corps du chariot (21) à la manière d'un porte-à-faux.

6. Le chariot (1) de transport d'ensemble d'alimentation en fil selon l'une quelconque des revendications 1 à 5, dans lequel
l'ensemble (10) d'alimentation en fil comprend un ensemble (10) d'alimentation en fil ou une pluralité d'ensembles (10) d'alimentation en fil, et la deuxième position (P2) est définie comme étant la position à laquelle ledit un ensemble (10) d'alimentation en fil est destiné à être suspendu, ou la pluralité d'ensembles (10) d'alimentation en fil est destinée à être suspendue.

7. Le chariot (1) de transport d'ensemble d'alimentation en fil selon l'une quelconque des revendications 1 à 6, dans lequel
la tige (22) formant broche s'étend à la manière d'un porte-à-faux en diagonale vers le haut depuis le corps du chariot (21).

8. Le chariot (1) de transport d'ensemble d'alimentation en fil selon l'une quelconque des revendications 1 à 7, dans lequel
ledit chariot (1) de transport d'ensemble d'alimentation en fil est un chariot destiné à transporter un ensemble (10) d'alimentation en fil destiné être extrait et fourni à un support de cantre (13) par un robot de cantre (15) tout en étant chargé avec l'ensemble (10) d'alimentation en fil.
